(19) **Europäisches Patentamt / European Patent Office / Office européen des brevets**

(11) **EP 4 576 872 A1**

(12) **EUROPEAN PATENT APPLICATION**
published in accordance with Art. 153(4) EPC

(43) Date of publication:
25.06.2025 Bulletin 2025/26

(21) Application number: 23854943.0

(22) Date of filing: 18.08.2023

(51) International Patent Classification (IPC):
*H04W 28/16* (2009.01)  *H04W 84/12* (2009.01)

(52) Cooperative Patent Classification (CPC):
H04W 28/16; H04W 84/12

(86) International application number:
PCT/JP2023/029871

(87) International publication number:
WO 2024/038909 (22.02.2024 Gazette 2024/08)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.08.2022 JP 2022131168

(71) Applicant: Panasonic Intellectual Property
Corporation
of America
Torrance, CA 90504 (US)

(72) Inventors:
• MINOTANI, Jun
Kadoma-shi, Osaka 571-0057 (JP)

• IWAI, Takashi
Kadoma-shi, Osaka 571-0057 (JP)
• TAKATA, Tomofumi
Kadoma-shi, Osaka 571-0057 (JP)
• HASHI, Ryutaro
Kadoma-shi, Osaka 571-0057 (JP)
• URABE, Yoshio
Kadoma-shi, Osaka 571-0057 (JP)
• MOTOZUKA, Hiroyuki
Kadoma-shi, Osaka 571-0057 (JP)

(74) Representative: Grünecker Patent- und
Rechtsanwälte
PartG mbB
Leopoldstraße 4
80802 München (DE)

(54) **COMMUNICATION DEVICE AND COMMUNICATION METHOD**

(57)  A communication device comprising a control unit that generates low latency traffic information relating to multi-AP coordinated transmission and a wireless transmission unit that transmits the generated low latency traffic information.

FIG. 4

EP 4 576 872 A1

# EP 4 576 872 A1

## Description

### Technical Field

The present disclosure relates to a communication apparatus and a communication method.

### Background Art

The Task Group (TG) has been proceeding with the specification formulation of IEEE 802.11be (hereinafter, also referred to as "1 1be"), which is a successor to the standard of the Institute of Electrical and Electronics Engineers (IEEE) 802.11ax (hereinafter, also referred to as "11ax") (see, for example, NPL 1).

### Citation List

### Patent Literature

PTL 1
WO2008/012114

### Non-Patent Literature

NPL 1
IEEE P802.11be™/D2.0, May 2022
NPL2
IEEE 802.11/617r3, Multi-AP Operation - Basic Definition
NPL 3
IEEE 802.11-20/1046r14, Protected TWT Enhancement for Latency Sensitive Traffic
NPL4
IEEE 802.11-21/1046r3, Multi-AP: TWT Information Sharing
NPL 5
IEEE 802.11-21/1028r0, CR BSR for RTA

### Summary of Invention

However, a control method for a low-latency traffic signal in Multi-Access Point (AP) coordinated transmission has not been determined.

One non-limiting and exemplary embodiment of the present disclosure contributes to providing a communication apparatus and a communication method each capable of improving the communication efficiency of coordinated communication in radio communication.

A communication apparatus according to an exemplary embodiment of the present disclosure includes: a controller that generates low-latency traffic information on Multi- Access Point (MAP) coordinated transmission; and a radio transmitter that transmits the generated low-latency traffic information.

It should be noted that general or specific embodiments may be implemented as a system, an apparatus, a method, an integrated circuit, a computer program, a storage medium, or any selective combination thereof.

According to an exemplary embodiment of the present disclosure, it is possible to improve the communication efficiency of coordinated communication in radio communication.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

FIG. 1 illustrates an example of communication in R-TWT;
FIG. 2 illustrates a format of a TWT element;
FIG. 3 is a sequence diagram for controlling coordinated transmission of an R-TWT period with a plurality of APs;
FIG. 4 is a block diagram illustrating a configuration of a downlink radio transmission apparatus according to Embodiment 1;

FIG. 5 is a block diagram illustrating a configuration of a downlink radio reception apparatus according to Embodiment 1;

FIG. 6 illustrates control information on R-TWT including low-latency traffic information on the MAP coordinated transmission;

FIG. 7 illustrates an operation example of R-TWT coordinated transmission in a case where different R-TWT SPs are configured for each BSS;

FIG. 8 illustrates an operation example of R-TWT coordinated transmission in a case where an R-TWT SP common to BSSs is configured;

FIG. 9 is a sequence diagram for controlling the coordinated transmission of an R-TWT period by a plurality of APs according to Embodiment 2;

FIG. 10 is a block diagram illustrating a configuration of a downlink radio transmission apparatus according to Embodiment 2;

FIG. 11 is a block diagram illustrating a configuration of a downlink radio reception apparatus according to Embodiment 2;

FIG. 12 is a diagram illustrating a management signal;

FIG. 13 illustrates an example of signaling that indicates low-latency traffic information on MAP coordinated transmission in a negotiation signal for the MAP coordinated transmission;

FIG. 14 illustrates an example of signaling that indicates the low-latency traffic information on the MAP coordinated transmission in a transmission-start indication signal for the MAP coordinated transmission;

FIG. 15 is a sequence diagram in which three APs determine TIDs to be used for the MAP coordinated transmission, using a management signal;

FIG. 16 illustrates a BSR format;

FIG. 17 is a sequence diagram in a case where the low-latency traffic information on the MAP coordinated transmission is indicated in buffer information;

FIG. 18 illustrates an example of signaling that indicates the low-latency traffic information on the MAP coordinated transmission by a combination of a TID bitmap and a BSR;

FIG. 19 illustrates a QoS Characteristics element;

FIG. 20 illustrates a TSPEC element;

FIG. 21 illustrates a TCLAS element;

FIG. 22 illustrates an Intra-Access Category element;

FIG. 23 is a sequence diagram in a case where the low-latency traffic information on the MAP coordinated transmission is indicated using the TSPEC element;

FIG. 24 is a sequence diagram in a case where the low-latency traffic information on the MAP coordinated transmission is indicated using control information of SCS;

FIG. 25 illustrates an SCS Request;

FIG. 26 illustrates a BSS BSR;

FIG. 27 is a sequence diagram of Solution 1 of Embodiment 2;

FIG. 28 is a sequence diagram in a case where a Sharing AP is changed depending on the presence or absence of the low-latency traffic information;

FIG. 29 is a sequence diagram in a case where an AP that participates in the Multi-AP coordinated transmission is determined based on the presence or absence of the low-latency traffic information;

FIG. 30 is a schematic diagram of C-SR in a case where each AP performs power control;

FIG. 31 is a sequence diagram of C-SR in a case where each AP performs the power control;

FIG. 32 illustrates a C-SR Info Request;

FIG. 33 is a schematic diagram of C-SR in a case where only one AP performs transmission power control;

FIG. 34 is a sequence diagram of C-SR in a case where only one AP performs the transmission power control;

FIG. 35 is a sequence diagram in a case where a transmission timing of C-SR is indicated by a time offset;

FIG. 36 illustrates a MAP Trigger frame that indicates the time offset;

FIG. 37 is a sequence diagram in a case where the transmission timing of C-SR is indicated by the number of data units;

FIG. 38 illustrates a MAP Trigger frame that indicates the number of data units;

FIG. 39 is a schematic diagram of a PSR-based SR;

FIG. 40 is a schematic diagram of DL C-SR;

FIG. 41 illustrates a MAP Trigger frame that indicates DL C-SR transmission;

FIG. 42 illustrates signaling that indicates a TID bitmap for each link;

FIG. 43 illustrates signaling that indicates a bitmap of a link for each TID; and

FIG. 44 illustrates signaling that indicates the presence or absence of the TID bitmap for each link for each TID in control information.

Description of Embodiments

Hereinafter, embodiments of the present disclosure will be described in detail with reference to the accompanying drawings.

[Multi-AP Coordination]

In 11be, Multi-AP (MAP) coordination (for example, also referred to as "coordinated communication") in which a plurality of access points (also referred to as "base stations", hereinafter referred to as "APs") perform transmission and reception in coordination with each other has been studied (for example, see NPL 2).
In the MAP coordinated communication, for example, an AP that has acquired a channel use period (TXOP: Transmission Opportunity) is referred to as a "Sharing AP." AP may acquire TXOP by, for example, Carrier Sense Multiple Access/Collision Avoidance (CSMA/CA). Further, in the MAP coordinated communication, an AP that is coordinated by a Sharing AP is referred to as a Shared AP. Further, in the MAP coordinated communication, a terminal (also referred to as a station (STA) or a non-AP STA) that belongs to (for example, is associated with) a Sharing AP may be referred to as a "Sharing STA," and a STA that belongs to a Shared AP may be referred to as a "Shared STA."
The MAP coordinated communication includes, for example, Joint Transmission (JT), Coordinated Beamforming (C-BF), Coordinated Spatial Reuse (C-SR), Coordinated Orthogonal Frequency Division Multiple Access (C-OFDMA), or Coordinated Time Division Multiple Access (C-TDMA). Further, the MAP coordinated communication may be either Downlink (DL) coordinated transmission or Uplink (UL) coordinated transmission.

[Transmission of Low-Latency Traffic Signal]

In 11be, Restricted-Target Wake Time (R-TWT) has been discussed, which sets a period for prioritizing the transmission of a low-latency traffic (also referred to as latency sensitive traffic) signal (for example, NPL 3).
In the present disclosure, the AP indicates, to another AP, control information (for example, low-latency traffic information) of the low-latency traffic signal. For example, the low-latency traffic signal includes at least one of a traffic signal with a priority (for example, transmission availability information, User priority), a traffic signal with a large buffer queue size, a traffic signal with a small allowable delay amount (for example, Delay Bound), and a traffic signal with a high required quality (for example, Media Access Control (MAC) Service Data Unit (MSDU) Delivery Ratio). The low-latency traffic information includes at least one of a TID bitmap for determining whether transmission is possible, buffer information (for example, a Buffer Status Report (BSR)), and Quality of Service (QoS) information.

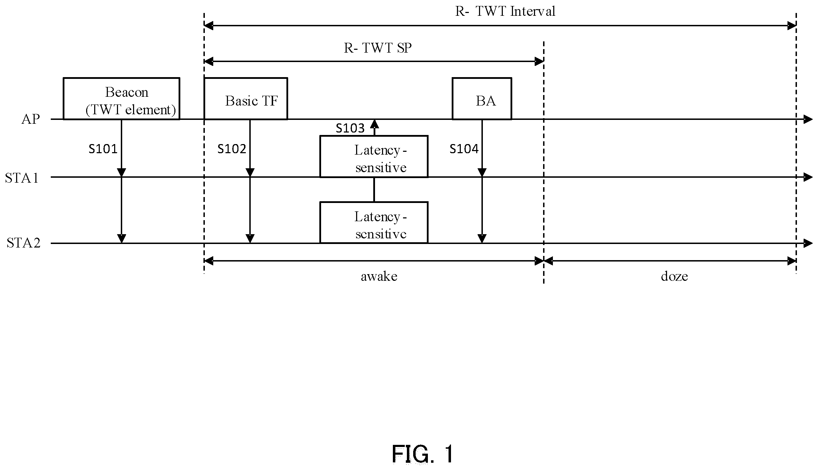

FIG. 1 illustrates an example of communication in R-TWT.
The AP indicates, to an STA, period information of R-TWT and information on transmittable low-latency traffic, in a Broadcast TWT information element (IE) included in a Beacon signal (S101). The period information of R-TWT includes an R-TWT Service Period (SP), which is a transmission period of the low-latency traffic signal, and an R-TWT Interval, which is a repetition period of R-TWT.
An STA that has received the beacon signal including the R-TWT element from the AP operates in an awake state during the R-TWT SP, and in the duration of the R-TWT SP period, the AP transmits a Basic Trigger frame (TF) to the STA to request the transmission of UL low-latency traffic (S102), the STA transmits a UL low-latency traffic signal (S103), and the AP transmits a Block Acknowledgement (BA) (S104). Further, the period not included in the R-TWT SP operates in a power-saving mode under a doze state and does not perform signal transmission and reception.

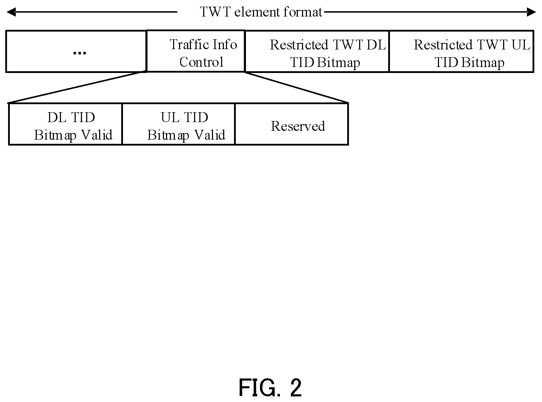

FIG. 2 illustrates a format of a TWT element. The information on low-latency traffic transmittable in the duration of the R-TWT SP period is indicated in a Restricted TWT DL Traffic Identifier (TID) Bitmap subfield and a Restricted TWT UL TID Bitmap subfield included in the TWT element illustrated in FIG. 2.
Each bit in the Restricted TWT DL TID Bitmap subfield and/or the Restricted TWT UL TID Bitmap subfield (hereinafter referred to as Restricted TWT DL/UL TID Bitmap) corresponds to the TID, which is used to identify the user priority of a Quality of Service (QoS) data frame and the Access Category (AC) of traffic, as indicated in, for example, Table 1. The user priority of the QoS data frame and the Access Category (AC) of the traffic may be identified by means other than Table 1.

[Table 1]

| Priority | User Priority | 802.1D class | QoS Access Category | Designation |
|---|---|---|---|---|
| Lowest | 1 | BK | AC_BK | Background |
| | 2 | - | AC_BK | Background |

(continued)

| Priority | User Priority | 802.1D class | QoS Access Category | Designation |
|----------|---------------|--------------|---------------------|-------------|
|          | 0             | BE           | AC_BE               | Best Effort |
|          | 3             | EE           | AC_BE               | Best Effort |
|          | 4             | CL           | AC_VI               | Video       |
|          | S             | Video        | AC_VI               | Video       |
|          | 6             | Video        | AC_VO               | Voice       |
| Highest  | 7             | NC           | AC_VO               | Voice       |

When each bit in the Restricted TWT DL/UL TID Bitmap is one, it is indicated that the TID corresponding to the bit is transmittable in the duration of the R-TWT SP period. On the other hand, when each bit in the Restricted TWT DL/UL TID Bitmap is zero, it is indicated that the TID corresponding to the bit is not transmittable in the duration of the R-TWT SP period.

Further, the DL/UL TID Bitmap Valid indicates whether valid information is included in the Restricted TWT DL/UL TID Bitmap. For example, in a case of DL/UL TID Bitmap Valid = 1, it is indicated that any bit in the Restricted TWT DL/UL TID Bitmap is non-zero. Further, in a case of DL/UL TID Bitmap Valid = 0, it is indicated that all TIDs are transmittable in the duration of the R-TWT SP period.

Note that, in FIG. 1, an example is illustrated in which the AP transmits a Basic TF to an STA and requests the transmission of UL low-latency traffic (S102), the STA transmits a UL low-latency traffic signal (S103), and the AP transmits the BA (S 104) in the duration of the R-TWT SP period, but the UL transmission in the duration of the R-TWT SP period is not limited to UL transmission based on a Trigger frame. For example, the STA may acquire channel access by CSMA/CA in the duration of the R-TWT SP period and transmit a UL low-latency traffic signal to the AP.

However, a method of controlling a low-latency traffic signal in the MAP coordinated transmission has not been sufficiently studied.

A terminal according to an exemplary embodiment of the present disclosure includes: control circuitry that determines control on a low-latency traffic signal; control circuitry that determines control on MAP coordinated transmission; and control circuitry that performs scheduling, based on control information on low-latency traffic information and MAP coordinated transmission.

A radio communication system according to an exemplary embodiment of the present disclosure includes at least two APs (for example, also referred to as downlink radio transmission apparatuses in DL communication) and one STA (for example, also referred to as a downlink radio reception apparatus in DL communication). For example, the AP transmits a DL signal to another AP or the STA. Further, the STA transmits a UL signal to the AP based on the DL signal received from the AP.

[Embodiment 1]

In Embodiment 1, a plurality of APs and a plurality of STAs coordinate to transmit a signal including a low-latency traffic signal in an R-TWT SP. Hereinafter, a method will be described in which two APs (for example, AP 1 and AP 2) transmit and receive control information on a low-latency traffic signal (for example, low-latency traffic information) between APs, and an STA transmits a signal including a UL low-latency traffic signal in the R-TWT SP, and an AP receives the signal including the UL low-latency traffic signal.

The AP can transmit a signal including a DL low-latency traffic signal, and the STA can receive the signal including the DL low-latency traffic signal.

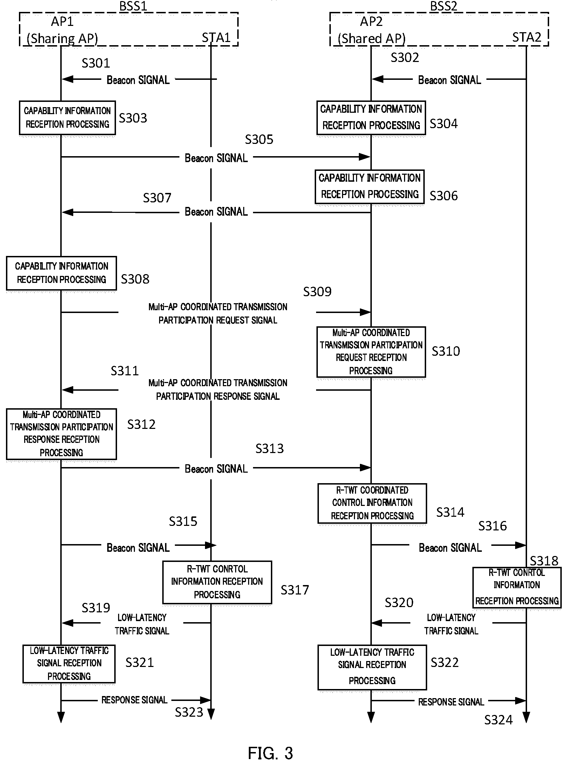

Operation examples of an AP and an STA in Embodiment 1 will be described. FIG. 3 is a sequence diagram for controlling MAP coordinated transmission of an R-TWT SP by a plurality of APs, as an example of Embodiment 1. At this time, Basic Service Set (BSS) 1 includes AP 1 and STA 1, and BSS 2 includes AP 2 and STA2.

STA 1 and STA 2 transmit a beacon signal including capability information on the MAP coordinated transmission and capability information on R-TWT to the APs to which they belong, respectively (S301 and S302). A signal including these pieces of capability information is not limited to the beacon signal. For example, an association signal to be transmitted by the STA to the AP may include the capability information on the MAP coordinated transmission and the capability information on R-TWT.

Each AP performs reception processing of the beacon signal transmitted from the corresponding STA, and holds the capability information on the MAP coordinated transmission and the capability information on R-TWT in a buffer (S303 and S304).

Each AP transmits the beacon signal including the capability information on the MAP coordinated transmission and the capability information on R-TWT to another AP (S305 and S307). The other AP may be an AP related to a Multi AP.

Each AP performs reception processing of the beacon signal transmitted from the other AP and holds the capability information on the MAP coordinated transmission and the capability information on R-TWT in a buffer (S306 and S308).

AP 1 operates as a Sharing AP that acquires TXOP and leads the MAP coordinated transmission. AP 1 transmits a MAP coordinated transmission participation request signal to AP 2 (S309).

AP 2 performs reception processing of the MAP coordinated transmission participation request signal (S310), determines whether to participate in the MAP coordinated transmission based on the capability information on the MAP coordinated transmission, and transmits a MAP coordinated transmission participation response signal to AP 1 (S311). At this time, AP 1 may include request information on R-TWT coordination in the MAP coordinated transmission participation request signal. Meanwhile, AP 2 may include response information on the R-TWT coordination in the MAP coordinated transmission participation response signal.

AP 1 performs reception processing of the MAP coordinated transmission participation response signal (S312), and transmits a beacon signal including R-TWT coordinated control information (for example, a TWT element) to an AP (for example, AP 2) that can participate in the MAP coordinated transmission and R-TWT coordinated transmission (S313). The R-TWT coordinated control information includes information on the duration of the R-TWT SP for each BSS and information on the type of low-latency traffic signal transmittable in the R-TWT SP.

AP 2 performs reception processing of the beacon signal including the R-TWT coordinated control information (S314).

Each AP (for example, AP 1 and AP 2) includes R-TWT control information generated based on the R-TWT coordinated control information in a beacon signal and then transmits the beacon signal to its respective subordinate STAs (for example, STA 1 or STA2) (S315 and S316).

Each STA (for example, STA 1 and STA 2) performs reception processing of the R-TWT control information (S317 and S318).

Each STA transmits the low-latency traffic signal to the AP (for example, AP 1 or AP 2) to which the STA belongs in accordance with the transmission period and the type of the low-latency traffic signal that have been indicated by the R-TWT control information (S319 and S320).

Each AP (for example, AP 1 and AP 2) performs reception processing of the low-latency traffic signal (S321 and S322), and in a case where no signal error is included, transmits a response signal (for example, Acknowledgement (ACK) or BA) to the transmission source STA of the low-latency traffic signal (S323 and S324).

[Configuration Example]

Configuration Examples of an AP and an STA in Embodiment 1 will be described.

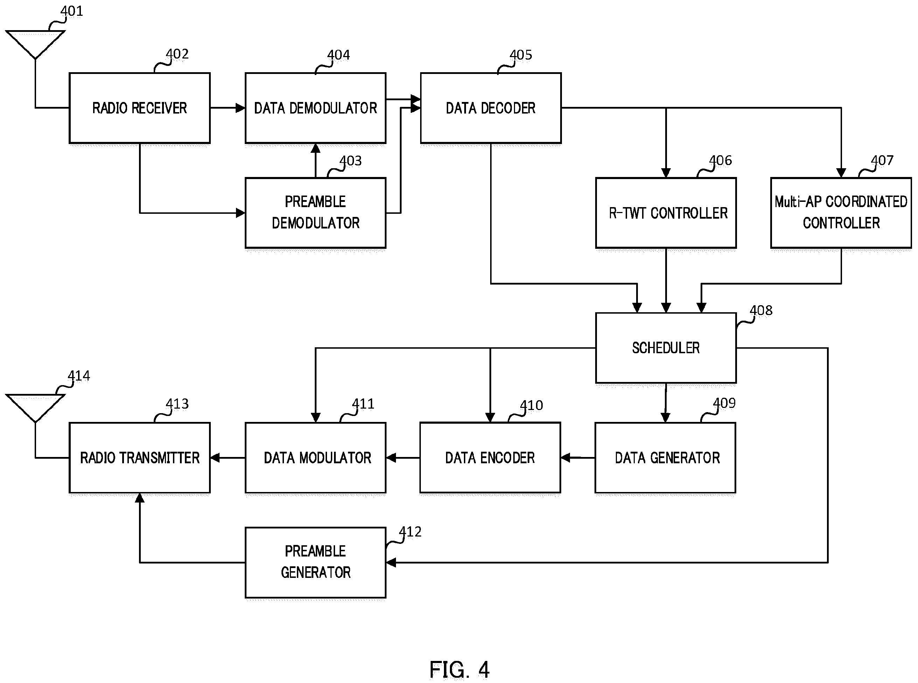

FIG. 4 is a block diagram illustrating a configuration of a downlink radio transmission apparatus (for example, AP) according to Embodiment 1.

As illustrated in FIG. 4, the downlink radio transmission apparatus includes reception antenna 401, radio receiver 402, preamble demodulator 403, data demodulator 404, data decoder 405, R-TWT controller 406, Multi-AP coordinated controller 407, scheduler 408, data generator 409, data encoder 410, data modulator 411, preamble generator 412, radio transmitter 413, and transmission antenna 414.

At least a part of preamble demodulator 403, data demodulator 404, data decoder 405, R-TWT controller 406, Multi-AP coordinated controller 407, scheduler 408, data generator 409, data encoder 410, data modulator 411, and preamble generator 412 may constitute a controller.

In each configuration, a plurality of components may be configured as a single component. For example, reception antenna 401 and transmission antenna 414 may be a shared transmission/reception antenna, and a directional coupler or a diplexer may be used for the sharing. For example, radio receiver 402 and radio transmitter 413 may be combined into a single radio transceiver.

Radio receiver 402 receives a signal transmitted from a downlink radio transmission apparatus (for example, AP) or a downlink radio reception apparatus (for example, STA) via reception antenna 401, and performs radio reception processing such as down-conversion and/or Analog-to-Digital (A/D) conversion. Radio receiver 402 extracts (or divides) a preamble part (also referred to as a preamble signal) and a data part (also referred to as a data signal) from the signal after the radio reception processing and then outputs the preamble signal to preamble demodulator 403 and the data signal to data demodulator 404.

Preamble demodulator 403 performs a discrete Fourier transform (DFT) or a fast Fourier transform (FFT) on the preamble signal output from radio receiver 402, and extracts reception control information (for example, at least one of a bandwidth (BW), a modulation and coding scheme (MCS), and an error correction code) used for demodulating and decoding a data signal. Further, preamble demodulator 403 performs channel estimation based on the reference signal included in the preamble signal and derives a channel estimation value. Preamble demodulator 403 outputs the reception control information to data demodulator 404 and data decoder 405, and outputs the channel estimation value to data demodulator 404.

Data demodulator 404 performs FFT on the data signal output from radio receiver 402 and demodulates the data signal using the reception control information and the channel estimation value output from preamble demodulator 403. Data demodulator 404 outputs the demodulated data signal to data decoder 405.

Data decoder 405 decodes the demodulated data signal output from data demodulator 404 using the reception control information output from preamble demodulator 403. Data decoder 405 performs error determination on the decoded data signal using a method such as Cyclic Redundancy Check (CRC). In a case where no error is included in the decoded data signal, data decoder 405 outputs the decoded data signal to R-TWT controller 406, Multi-AP coordinated controller 407, and scheduler 408. Error correction may be performed instead of the error determination.

R-TWT controller 406 determines the downlink radio transmission apparatus and the downlink radio reception apparatus that can participate in R-TWT based on capability information on R-TWT included in the decoded data signal output from data decoder 405, and outputs R-TWT participation availability information to scheduler 408.

Multi-AP coordinated controller 407 determines, based on capability information on the MAP coordinated transmission included in the decoded data signal output from data decoder 405, the downlink radio transmission apparatus and the downlink radio reception apparatus that can participate in the MAP coordinated transmission and outputs MAP coordinated transmission participation availability information to scheduler 408.

Scheduler 408 determines scheduling information (for example, at least one of the repetition period of R-TWT for each BSS, the awake/doze interval length in the power saving mode, the type of low-latency traffic transmittable during the R-TWT SP, user information participating in the R-TWT coordination, information on resources (for example, at least one of a frequency resource and a time resource) that can be used for each user, MCS, and an error correction code) for the R-TWT coordinated transmission, based on the R-TWT participation availability information output from R-TWT controller 406 and the MAP coordinated transmission participation availability information output from Multi-AP coordinated controller 407.

Further, in a case where scheduling information of the R-TWT coordinated transmission generated by another downlink radio transmission apparatus is included in the decoded data signal output from data decoder 405, scheduler 408 determines the scheduling information (for example, at least one of user information that requests the transmission of a low-latency traffic signal, information on a resource (for example, at least one of a frequency resource and a time resource) that can be used for each user, MCS, and an error correction code) for a Trigger frame signal that requests a downlink radio reception apparatus under the control of the scheduler to transmit a low-latency traffic signal, based on the scheduling information for the R-TWT coordinated transmission. Scheduler 408 outputs the scheduling information for the R-TWT coordinated transmission and the scheduling information for the Trigger frame signal to data generator 409, data encoder 410, data modulator 411, and preamble generator 412.

Data generator 409 generates, based on the scheduling information output from scheduler 408, a data sequence to be transmitted to the downlink radio transmission apparatus or the downlink radio reception apparatus. For example, the data sequence to be transmitted to the downlink radio transmission apparatus includes at least one of the capability information on the MAP coordinated transmission, the capability information on R-TWT, the MAP coordinated transmission participation response signal, and the control information on the R-TWT coordinated transmission. For example, the data sequence to be transmitted to the downlink radio reception apparatus includes at least one of the control information on the R-TWT coordination and the Trigger frame signal that requests the downlink radio reception apparatus to transmit low-latency traffic. Data generator 409 outputs the data sequence to data encoder 410.

Data encoder 410 encodes the data sequence output from data generator 409 based on the scheduling information output from scheduler 408, and outputs the encoded data signal to data modulator 411.

Data modulator 411 performs modulation and inverse discrete Fourier transform (IDFT) or inverse fast Fourier transform (IFFT) on the encoded data signal output from data encoder 410, based on the coordination signal scheduling information output from scheduler 408, and outputs the modulated data signal to radio transmitter 413.

Preamble generator 412 generates a preamble signal based on the scheduling information output from scheduler 408. Preamble generator 412 performs modulation and IFFT processing, and outputs the resultant preamble signal to radio transmitter 413.

Radio transmitter 413 generates a radio frame (also referred to as a packet signal or a Physical Layer Convergence Protocol Data Unit (PPDU)) by adding the preamble signal output from preamble generator 412 to the modulated data signal output from data modulator 411. Radio transmitter 413 performs radio transmission processing such as Digital-to-Analog (D/A) conversion for a radio frame and/or up-conversion to a carrier frequency, and transmits the signal after the radio transmission processing to a downlink radio transmission apparatus or a downlink radio reception apparatus via transmission antenna 414.

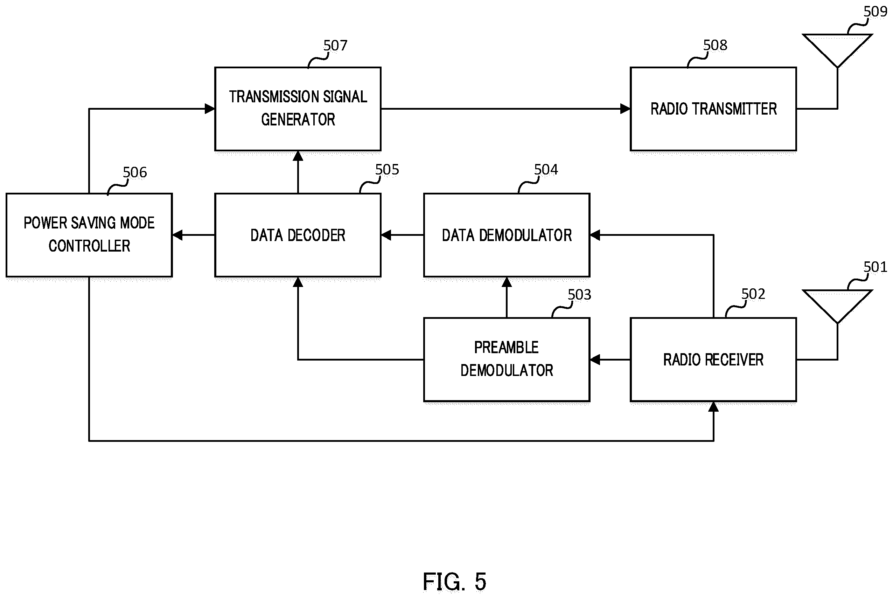

FIG. 5 is a block diagram illustrating a configuration of a downlink radio reception apparatus (for example, STA) according to Embodiment 1.

As illustrated in FIG. 5, the downlink radio reception apparatus includes reception antenna 501, radio receiver 502, preamble demodulator 503, data demodulator 504, data decoder 505, power saving mode controller 506, transmission signal generator 507, radio transmitter 508, and transmission antenna 509.

At least one of preamble demodulator 503, data demodulator 504, data decoder 505, power saving mode controller 506, and transmission signal generator 507 may constitute a controller.

In each configuration, a plurality of components may be configured as a single component. For example, reception antenna 501 and transmission antenna 509 may be a shared transmission/reception antenna, and a directional coupler or a diplexer may be used for sharing. For example, radio receiver 502 and radio transmitter 508 may be combined into a single radio transceiver.

Radio receiver 502 receives a signal transmitted from the downlink radio transmission apparatus via reception antenna 501. When power saving mode information output from power saving mode controller 506 is in an awake interval or when no power saving mode information is output, radio receiver 502 performs radio reception processing such as down-conversion and/or A/D conversion of the reception signal. Radio receiver 502 extracts a preamble signal and a data signal from the reception signal after the radio reception processing and outputs the preamble signal to preamble demodulator 503 and the data signal to data demodulator 504. Further, when the power saving mode information output from power saving mode controller 506 is in a doze interval, radio receiver 502 stops the radio reception processing.

Preamble demodulator 503 performs FFT on the preamble signal output from radio receiver 502 and thus extracts reception control information (for example, at least one of BW, MCS, and an error correction code) used for demodulating and decoding the data signal. Further, preamble demodulator 503 performs channel estimation based on a reference signal included in the preamble signal and derives a channel estimation value. Preamble demodulator 503 outputs the reception control information to data demodulator 504 and data decoder 505 and outputs the channel estimation value to data demodulator 504.

Data demodulator 504 performs FFT on the data signal output from radio receiver 502, demodulates the data signal using the reception control information and the channel estimation value output from preamble demodulator 503 and then outputs the demodulated data signal to data decoder 505.

Data decoder 505 decodes the demodulated data signal output from data demodulator 504 using the reception control information output from preamble demodulator 503. Data decoder 505 performs error determination on the decoded data signal using a method such as CRC. In a case where no error is included in the decoded data signal, the data decoder outputs the decoded data signal to power saving mode controller 506 and transmission signal generator 507. Error correction may be performed instead of the error determination.

Power saving mode controller 506 holds information, which is included in the decoded data signal output from data decoder 505, on the repetition period of R-TWT in the scheduling information on the R-TWT coordinated transmission and the awake/doze interval length of the power saving mode, in a buffer. Further, power saving mode controller 506 outputs power saving mode information indicating whether the current power saving mode is in the awake interval or doze interval to radio receiver 502 and transmission signal generator 507.

Transmission signal generator 507 generates a data sequence to be transmitted to the downlink radio transmission apparatus, based on the decoded data signal output from data decoder 505. For example, the data sequence to be transmitted to the downlink radio transmission apparatus includes capability information on the MAP coordinated transmission, capability information on R-TWT, and a response signal (ACK or BA). Further, in a case where the power saving mode information output from power saving mode controller 506 is in the awake interval, transmission signal generator 507 generates a data sequence of a low-latency traffic signal to be transmitted, based on the type of low-latency traffic signal for the scheduling information on the R-TWT coordinated transmission included in the decoded data signal output from data decoder 505.

On the other hand, in a case where the power saving mode information output from power saving mode controller 506 is in the doze interval, transmission signal generator 507 stops the generation processing of the transmission signal. Further, when the decoded data signal output from data decoder 505 includes a Trigger frame that requests the transmission of the low-latency traffic signal, transmission signal generator 507 generates a data sequence to be transmitted in a Trigger-based PPDU (TB PPDU), based on the control information included in the Trigger frame. Transmission signal generator 507 performs encoding on the generated data sequence, performs allocation to a predetermined frequency resource, performs modulation and IFFT processing and thereby generates a data signal. The transmission signal generator generates a radio frame by adding a preamble signal to the data signal and outputs the radio frame to radio transmitter 508.

Radio transmitter 508 performs radio transmission processing such as D/A conversion and/or up-conversion to a carrier frequency on the radio frame output from transmission signal generator 507 and then transmits the signal after the radio transmission processing to the downlink radio transmission apparatus via transmission antenna 509.

[Control Method]

Next, a description will be given of a method of indicating low-latency traffic information on the MAP coordinated transmission in control information on R-TWT.

In Embodiment 1, the AP indicates the low-latency traffic information on the MAP coordinated transmission in the control information on R-TWT. For example, the AP indicates, to another AP that participates in the MAP coordinated transmission, the control information on R-TWT and performs the R-TWT coordinated transmission.

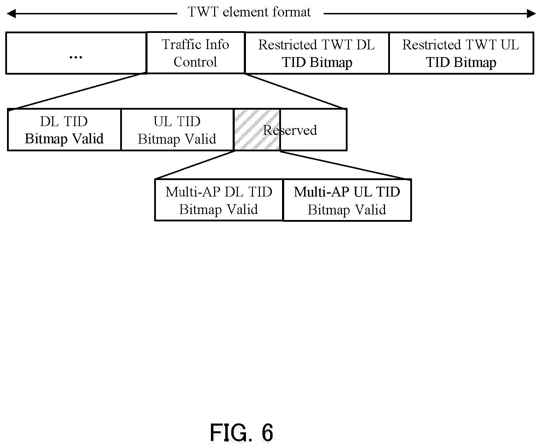

FIG. 6 illustrates an example of the control information on R-TWT including the low-latency traffic information on the MAP coordinated transmission. In FIG. 6, a part of Reserved included in Traffic Info Control of a TWT element format is used to indicate Multi-AP DL TID Bitmap Valid and Multi-AP UL TID Bitmap Valid.

In a case of Multi-AP DL/UL TID Bitmap Valid = 1, the type of TID transmittable in the R-TWT coordinated transmission is indicated in a Restricted TWT DL/UL TID Bitmap. That is, a Restricted TWT DL TID Bitmap field includes information indicating the type of TID transmittable in the R-TWT coordinated transmission in downlink (direction from AP to STA), and a Restricted TWT UL TID Bitmap field includes information indicating the type of TID transmittable in the R-TWT coordinated transmission in uplink (direction from STA to AP).

In detail, a Multi-AP DL TID Bitmap Valid subfield includes information indicating whether the information indicating the type of TID transmittable in the R-TWT coordinated transmission in downlink (for example, Restricted TWT DL TID Bitmap field) is included in the TWT element, and a Multi-AP UL TID Bitmap Valid subfield includes information indicating whether the information indicating the type of TID transmittable in the R-TWT coordinated transmission in uplink (for example, Restricted TWT UL TID Bitmap field) is included in the TWT element. Each bit in the Restricted TWT DL TID Bitmap field and/or the Restricted TWT UL TID Bitmap field may correspond to a TID value and may indicate whether the corresponding TID is transmittable in the R-TWT coordinated transmission.

Field names and subfield names are not limited to these examples. Further, instead of a bitmap indicating the type of TID, the maximum value or the minimum value of TID may be indicated. Further, instead of TID, information indicating the type of an access category (AC) transmittable in the R-TWT coordinated transmission (for example, a bitmap corresponding to each of access categories AC_VO, AC_VI, AC_BE, and AC_BK) may be included in the TWT element.

In a case of Multi-AP DL/UL TID Bitmap Valid = 0, the type of TID that can be used for the R-TWT coordinated transmission is not indicated. Further, a combination in which both subfields of the DL TID Bitmap Valid and the Multi-AP DL TID Bitmap Valid indicate one is prohibited. Similarly, a combination in which both subfields of the UL TID Bitmap Valid and the Multi-AP UL TID Bitmap Valid indicate one is prohibited.

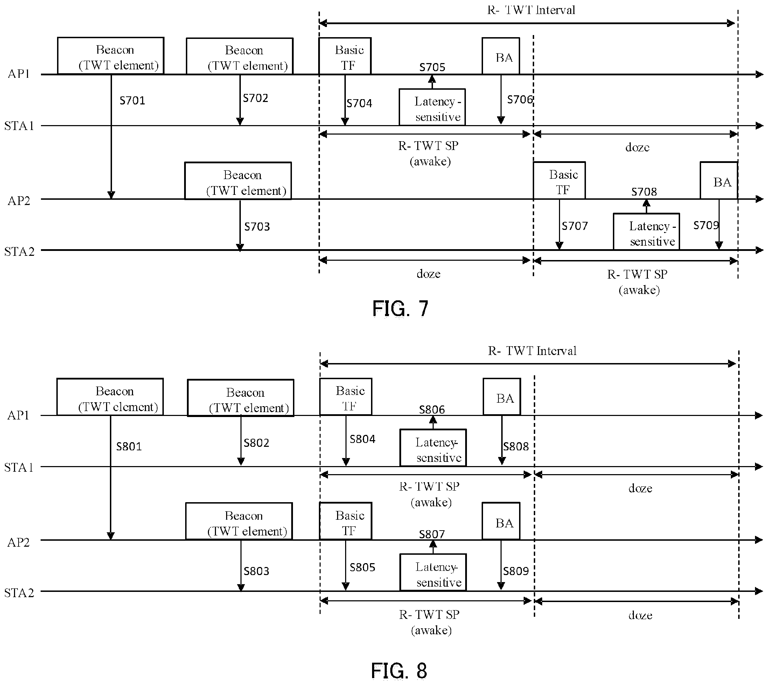

FIGS. 7 and 8 each illustrate an operation example of the R-TWT coordinated transmission. At this time, BSS 1 includes AP1 and STA 1, and BSS 2 includes AP 2 and STA2.

FIG. 7 illustrates an operation example of R-TWT coordinated transmission in a case where different transmission timings are allocated for each BSS.

First, a beacon signal transmitted by AP 1 includes the TWT element for each BSS and indicates, for example, the duration of the R-TWT SP for each BSS and the type of low-latency traffic (S701).

Subsequently, each AP (each BSS) indicates, to the subordinate STA, the duration of the R-TWT SP, which is different for each BSS, in the TWT element of the beacon signal (S702 and S703). Further, the TWT element for each BSS may be Multi-AP DL/UL TID Bitmap Valid = 1, and the types of different low-latency traffic signals may be indicated.

After the transmission of the TWT element for each BSS, each AP indicates, to its respective subordinate STAs, the R-TWT control information acquired from the TWT element for each BSS in the awake interval using the Basic TF (S704 and S707).

Each STA (for example, STA 1 and STA2) transmits a UL low-latency traffic signal to the AP to which the STA belongs (S705 and S708).

Each AP (for example, AP 1 and AP 2) performs reception processing of the UL low-latency traffic signal and transmits a response signal (for example, BA) to the transmission source STA of the UL low-latency traffic signal in a case where no signal error is included (S706 and S709).

FIG. 8 illustrates an operation example of the R-TWT coordinated transmission in a case where a transmission timing common to BSSs is allocated.

First, a beacon signal transmitted by AP 1 includes a TWT element common to BSSs and indicates, for example, the duration of R-TWT SP common to BSSs and the type of low-latency traffic signal (S801).

Subsequently, each AP (each BSS) indicates, to the subordinate STA, the duration of the R-TWT SP common to BSSs in the TWT element of the beacon signal (S802 and S803).

Further, frequency resource information that can be used during the R-TWT SP may be indicated for each BSS. Further, the AP may perform the MAP coordinated transmission (for example, JT, C-BF, or C-SR) including a low-latency traffic signal within the common R-TWT SP.

After the transmission of the TWT element for each BSS (S802 and S803), each AP indicates, to its respective subordinate STAs, the R-TWT control information acquired from the TWT element for each BSS in the awake interval using the Basic TF (S804 and S805).

Each STA (for example, STA 1 and STA 2) transmits the UL low-latency traffic signal to the AP to which the STA belongs (S806 and S807). The UL low-latency traffic signal transmitted by each STA may be MAP coordinated transmission.

Each AP (for example, AP 1 and AP 2) performs reception processing of the UL low-latency traffic signal and then transmits a response signal (for example, BA) to the transmission source STA of the UL low-latency traffic signal in a case where no signal error is included (S808 and S809).

Each AP may transmit a non-low-latency traffic signal with a frequency resource other than the frequency resource indicated in the control information on R-TWT in the duration of the R-TWT SP (in other words, the awake interval). Further, the AP may communicate with an STA to which the control information on R-TWT is not indicated, in the TWT element outside the duration of the R-TWT SP (in other words, in the doze interval). For example, the AP may transmit the TWT element to an STA and thus indicate control information on an Individual TWT (at least one of interval information on the Individual TWT and frequency resource information), and the AP and the STA may perform communication in accordance with the control information on the Individual TWT.

In the control method of Embodiment 1, an AP can control R-TWT for each BSS. In the case of FIG. 7, by allocating a transmission timings different for each BSS, it is possible to avoid the UL low-latency traffic signal from receiving interference from signals of other BSSs, thereby improving the communication quality. Further, in the case of FIG. 8, by allocating a transmission timing common to BSSs and indicating the type of a common and transmittable low-latency traffic signal, it is possible to achieve the MAP coordinated transmission including the UL low-latency traffic signal in the R-TWT period.

Note that an AP can transmit a signal including a DL low-latency traffic signal, and an STA can receive the signal including the DL low-latency traffic signal.

[Embodiment 2]

In Embodiment 2, a plurality of APs and a plurality of STAs coordinate to indicate low-latency traffic information in non-R-TWT control information. Further, the plurality of APs and the plurality of STAs transmit low-latency traffic signals based on the low-latency traffic information. Hereinafter, a method will be described in which two APs transmit and receive the low-latency traffic information on the low-latency traffic signal between the APs using the non-R-TWT control information, the APs transmit DL low-latency traffic signals to STAs, and the STAs receive the DL low-latency traffic signals, as an example.

Note that an STA can transmit a signal including a UL low-latency traffic signal, and an AP can receive the signal including the UL low-latency traffic signal.

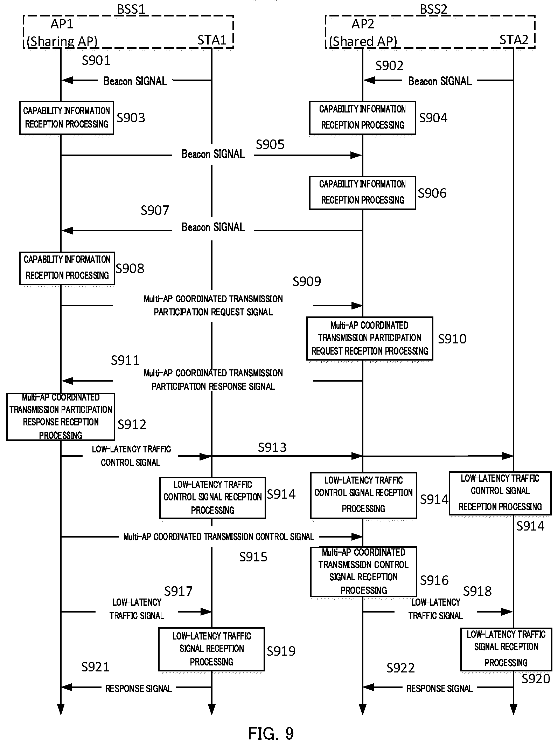

Operation examples of an AP and an STA in Embodiment 2 will be described. FIG. 9 is a sequence diagram for controlling MAP coordinated transmission in an R-TWT period by a plurality of APs, as an example of Embodiment 2. At this time, BSS 1 includes AP 1 and STA 1, and BSS 2 includes AP 2 and STA2.

Each STA (for example, STA 1 and STA 2) transmits a beacon signal including capability information on the MAP coordinated transmission to an AP that belongs to a common BSS (S901 and S902). A signal including the capability information is not limited to the beacon signal. For example, an association signal transmitted by an STA to an AP may include the capability information on the MAP coordinated transmission.

Each AP performs reception processing of the beacon signal transmitted from the STA and holds the capability information on the MAP coordinated transmission in a buffer (S903 and S904).

Each AP (for example, AP 1 and AP 2) transmits a beacon signal including the capability information on the MAP coordinated transmission to another AP (S905 and S907).

Each AP performs reception processing of the beacon signal transmitted from another AP and holds the capability information on the MAP coordinated transmission in a buffer (S906 and S908).

AP 1 operates as a Sharing AP that acquires TXOP and leads the MAP coordinated transmission.

AP 1 transmits a Multi-AP coordinated transmission participation request signal to AP 2 (S909).

AP 2 performs reception processing of the Multi-AP coordinated transmission participation request signal (S910), determines whether to participate in the MAP coordinated transmission based on the capability information on the MAP coordinated transmission, and transmits a Multi-AP coordinated transmission participation response signal to AP 1 (S911).

AP 1 performs reception processing of the Multi-AP coordinated transmission participation response signal (S912), and transmits a low-latency traffic control signal to an AP and an STA that can participate in the MAP coordinated transmission (S913). The low-latency traffic control signal includes information on the type of low-latency traffic signal transmittable in the MAP coordinated transmission.

The AP and STA that have received the low-latency traffic control signal store the information on the type of low-latency traffic signal transmittable in the MAP coordinated transmission in a buffer (S914).

AP 1 transmits a Multi-AP coordinated transmission control signal to AP 2 (S915). The Multi-AP coordinated transmission control signal includes at least one of type information on the MAP coordinated transmission, destination information on the MAP coordinated transmission signal, resource information (for example, at least one of frequency resource information and time resource information) that can be used for each AP, information on weighting (also referred to as steering, spatial mapping, or transmission precoding) for amplitude and phase in the coordinated transmission, transmission power information, and transmission timing information.

AP 2 that has received the Multi-AP coordinated transmission control signal stores information on the Multi-AP coordinated transmission control signal in a buffer (S916).

Each AP (for example, AP 1 and AP 2) transmits a MAP coordinated transmission signal including a DL low-latency traffic signal to the STA in accordance with the transmission timing, the resource information, and the type of low-latency traffic signal indicated by the Multi-AP coordinated transmission control signal and the low-latency traffic control signal (S917 and S918).

Each STA (for example, STA 1 and STA 2) performs reception processing of the MAP coordinated transmission signal including the DL low-latency traffic signal (S919 and S920), and in a case where no signal error is included, transmits a response signal (for example, ACK or BA) to the AP that is the transmission source of the MAP coordinated transmission signal (S921 and S922).

[Configuration Example]

Configuration examples of an AP and an STA in Embodiment 2 will be described.

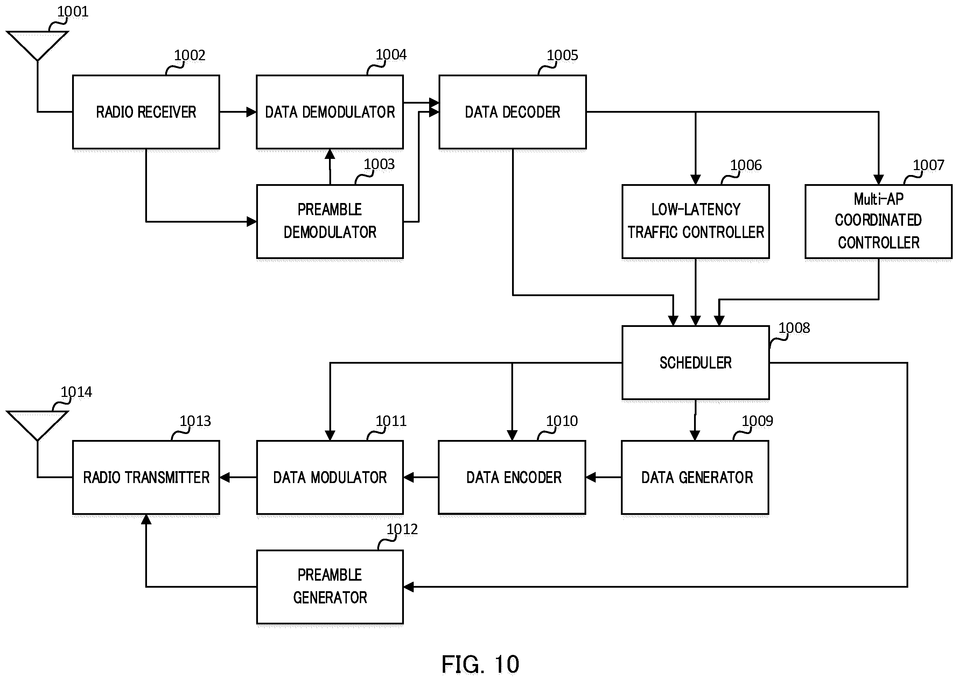

FIG. 10 is a block diagram illustrating a configuration of a downlink radio transmission apparatus (for example, AP) according to Embodiment 2.

As illustrated in FIG. 10, the downlink radio transmission apparatus includes reception antenna 1001, radio receiver 1002, preamble demodulator 1003, data demodulator 1004, data decoder 1005, low-latency traffic controller 1006, Multi-AP coordinated controller 1007, scheduler 1008, data generator 1009, data encoder 1010, data modulator 1011, preamble generator 1012, radio transmitter 1013, and transmission antenna 1014.

At least one of preamble demodulator 1003, data demodulator 1004, data decoder 1005, low-latency traffic controller 1006, Multi-AP coordinated controller 1007, scheduler 1008, data generator 1009, data encoder 1010, data modulator 1011, and preamble generator 1012 may constitute a controller.

In each configuration, a plurality of components may be configured as a single component. For example, reception antenna 1001 and transmission antenna 1014 may be a shared transmission/reception antenna, and a directional coupler or a diplexer may be used for sharing. For example, radio receiver 1002 and radio transmitter 1013 may be combined into a single radio transceiver.

Radio receiver 1002 receives a signal transmitted from a downlink radio transmission apparatus or a downlink radio reception apparatus (for example, STA) via reception antenna 1001, and performs radio reception processing such as down-conversion and/or A/D conversion. Radio receiver 1002 extracts (or divides) a preamble part (also referred to as a preamble signal) and a data part (also referred to as a data signal) from the signal after the radio reception processing, and outputs the preamble signal to preamble demodulator 1003 and the data signal to data demodulator 1004.

Preamble demodulator 1003 performs FFT on the preamble signal output from radio receiver 1002, and extracts reception control information (for example, at least one of BW, MCS, and an error correction code) used for demodulating and decoding a data signal. Further, preamble demodulator 1003 performs channel estimation based on a reference signal included in the preamble signal and derives a channel estimation value. Preamble demodulator 1003 outputs the reception control information to data demodulator 1004 and data decoder 1005, and outputs the channel estimation value to data demodulator 1004.

Data demodulator 1004 performs an FFT on the data signal output from radio receiver 1002 and demodulates the data signal using the reception control information and the channel estimation value output from preamble demodulator 1003. Data demodulator 1004 outputs the demodulated data signal to data decoder 1005.

Data decoder 1005 decodes the demodulated data signal output from data demodulator 1004 using the reception control information output from preamble demodulator 1003. Data decoder 1005 performs error determination on the decoded data signal using a method such as CRC. In a case where no error is included in the decoded data signal, data decoder 1005 outputs the decoded data signal to low-latency traffic controller 1006, Multi-AP coordinated controller 1007, and scheduler 1008. Error correction may be performed instead of the error determination.

Low-latency traffic controller 1006 stores low-latency traffic information included in the decoded data signal output from data decoder 1005 in a buffer, and outputs, as the low-latency traffic information, information on a downlink radio transmission apparatus and a downlink radio reception apparatus capable of transmitting and receiving a low-latency traffic signal, and the type of transmittable low-latency traffic signal to scheduler 1008.

Multi-AP coordinated controller 1007 determines, based on capability information on the MAP coordinated transmission included in the decoded data signal output from data decoder 1005, the downlink radio transmission apparatus and the downlink radio reception apparatus that can participate in the MAP coordinated transmission, and outputs MAP coordinated transmission participation availability information to scheduler 1008.

Scheduler 1008 determines the scheduling information (for example, at least one of the type of low-latency traffic signal transmittable in the MAP coordinated transmission, the type of MAP coordinated transmission, user information participating in the MAP coordinated transmission, information on resources (for example, at least one of a frequency resource and a time resource) that can be used for each user, MCS, and an error correction code) on the MAP coordinated transmission, based on the low-latency traffic information output from low-latency traffic controller 1006 and the MAP coordinated transmission participation permission information output from Multi-AP coordinated controller 1007.

Further, in a case where the decoded data signal output from data decoder 1005 includes scheduling information on the MAP coordinated transmission generated by another downlink radio transmission apparatus, scheduler 1008 determines, based on the scheduling information on the MAP coordinated transmission, the scheduling information (for example, at least one of user information requesting transmission of the low-latency traffic signal, information on a resource (for example, at least one of a frequency resource and a time resource) that can be used for each user, MCS, and an error correction code) on the low-latency traffic signal to be transmitted to a subordinate downlink radio reception apparatus. Scheduler 1008 outputs the scheduling information on the MAP coordinated transmission and the scheduling information on the low-latency traffic signal to data generator 1009, data encoder 1010, data modulator 1011, and preamble generator 1012.

Data generator 1009 generates a data sequence to be transmitted to a downlink radio transmission apparatus or a downlink radio reception apparatus, based on the scheduling information (the scheduling information on the MAP coordinated transmission and the scheduling information on the low-latency traffic signal) output from scheduler 1008. For example, the data sequence to be transmitted to the downlink radio transmission apparatus includes at least one of capability information on the MAP coordination, a MAP coordinated transmission participation request signal, a MAP coordinated transmission participation response signal, a low-latency traffic control signal related to the MAP coordinated transmission, and a MAP coordinated transmission control signal. For example, the data sequence to be transmitted to the downlink radio reception apparatus includes a low-latency traffic control signal related to the MAP coordinated transmission and a low-latency traffic signal addressed to the downlink radio reception apparatus. Data generator 1009 outputs a data sequence to data encoder 1010.

Data encoder 1010 encodes the data sequence output from data generator 1009 based on the scheduling information output from the scheduler, and then outputs the encoded data signal to data modulator 1011.

Data modulator 1011 performs modulation and IFFT on the encoded data signal output from data encoder 1010 based on the scheduling information output from scheduler 1008, and then outputs the modulated data signal to radio transmitter 1013.

Preamble generator 1012 generates a preamble signal based on the scheduling information output from scheduler 1008. Preamble generator 1012 performs modulation and IFFT processing and then outputs the resultant preamble signal to radio transmitter 1013.

Radio transmitter 1013 generates a radio frame (also referred to as a packet signal) by adding the preamble signal output from preamble generator 1012 to the modulated data signal output from data modulator 1011. Radio transmitter 1013 performs radio transmission processing such as D/A conversion for a radio frame and/or up-conversion to a carrier frequency, and then transmits the signal after the radio transmission processing to a downlink radio transmission apparatus or a downlink radio reception apparatus via transmission antenna 1014.

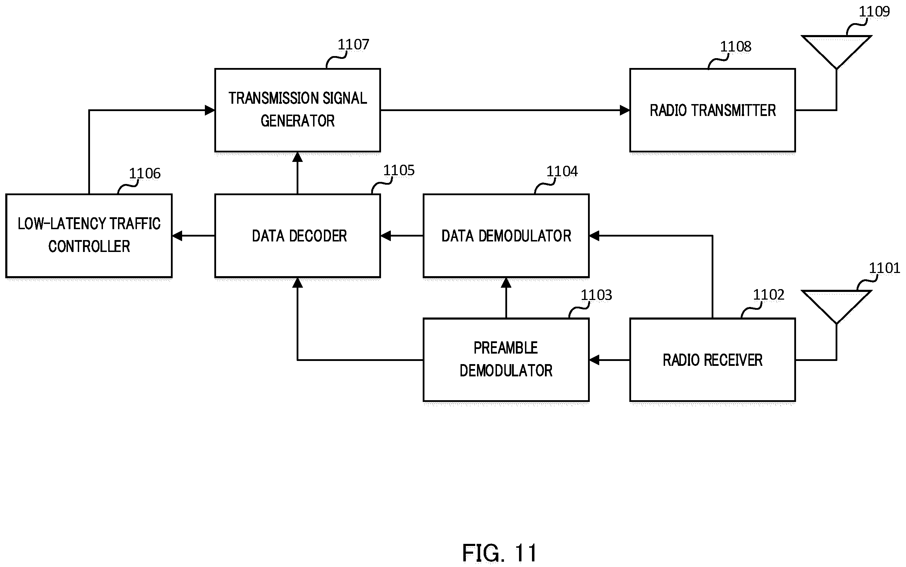

FIG. 11 is a block diagram illustrating a configuration of a downlink radio reception apparatus (for example, STA) according to Embodiment 2.

As illustrated in FIG. 11, the downlink radio reception apparatus includes reception antenna 1101, radio receiver 1102, preamble demodulator 1103, data demodulator 1104, data decoder 1105, low-latency traffic controller 1106, transmission signal generator 1107, radio transmitter 1108, and transmission antenna 1109.

At least one of preamble demodulator 1103, data demodulator 1104, data decoder 1105, low-latency traffic controller 1106, and transmission signal generator 1107 may constitute a controller.

In each configuration, a plurality of components may be configured as a single component. For example, reception antenna 1101 and transmission antenna 1109 may be a shared transmission/reception antenna, and a directional coupler or a diplexer may be used for the sharing. For example, radio receiver 1102 and radio transmitter 1108 may be combined into a single radio transceiver.

Radio receiver 1102 receives a signal transmitted from the downlink radio transmission apparatus via reception antenna 1101. Radio receiver 1102 performs radio reception processing such as down-conversion and/or A/D conversion of the reception signal. Radio receiver 1102 extracts a preamble signal and a data signal from the reception signal after radio reception processing and outputs the preamble signal to preamble demodulator 1103 and the data signal to data demodulator 1104.

Preamble demodulator 1103 performs an FFT on the preamble signal output from radio receiver 1102 and thus extracts reception control information (for example, at least one of BW, MCS, and an error correction code) used for demodulating and decoding the data part. Further, preamble demodulator 1103 performs channel estimation based on a reference signal included in the preamble signal and derives a channel estimation value. Preamble demodulator 1103 outputs the reception control information to data demodulator 1104 and data decoder 1105, and outputs the channel estimation value to data demodulator 1104.

Data demodulator 1104 performs FFT on the data signal output from radio receiver 1102, demodulates the data signal using the reception control information and the channel estimation value output from preamble demodulator 1103, and then outputs the demodulated data signal to data decoder 1105.

Data decoder 1105 decodes the demodulated data signal output from data demodulator 1104 using the reception control information output from preamble demodulator 1103. Data decoder 1105 performs error determination on the decoded data signal using a method such as CRC. In a case where no error is included in the decoded data signal, the data decoder outputs the decoded data signal to low-latency traffic controller 1106 and transmission signal generator 1107. Error correction may be performed instead of the error determination.

Low-latency traffic controller 1106 stores the low-latency traffic information included in the decoded data signal output from data decoder 1105 in a buffer, and outputs the type of transmittable low-latency traffic signal to transmission signal generator 1107.

Transmission signal generator 1107 generates a data sequence to be transmitted to the downlink radio transmission apparatus based on the decoded data signal output from data decoder 1105. For example, the data sequence to be transmitted to the downlink radio transmission apparatus includes at least one of capability information on the MAP coordinated transmission and a response signal (ACK or BA) to a signal including a low-latency traffic signal transmitted from the downlink radio transmission apparatus. Further, the data sequence to be transmitted to the downlink radio transmission apparatus includes a data sequence of the low-latency traffic signal to be transmitted to the downlink radio transmission apparatus, the data sequence being determined based on the type of the low-latency traffic signal for which transmission is permitted in the low-latency traffic information output from low-latency traffic controller 1106. Transmission signal generator 1107 encodes the generated data sequence, allocates it to a predetermined frequency resource, and performs modulation and IFFT processing to generate a data signal. Transmission signal generator 1107 generates a radio frame by adding a preamble signal to the data signal, and then outputs the resultant radio frame to radio transmitter 1108.

Radio transmitter 1108 performs radio transmission processing such as D/A conversion and/or up-conversion to a carrier frequency on the radio frame output from transmission signal generator 1107, and then transmits the signal after the radio transmission processing to the downlink radio transmission apparatus via transmission antenna 1109.

As described in Embodiment 1 and Embodiment 2, an AP of the present disclosure indicates the low-latency traffic information to another AP.

The low-latency traffic signal is, for example, at least one of a traffic signal with a priority (for example, transmission availability information or priority for each user (User priority)), a traffic signal with a large amount (Buffer queue size) stored in a buffer, a traffic signal with a small allowable delay amount (Delay Bound), and a traffic signal with a high required quality (MAC Service Data Unit (MSDU) delivery ratio).

Further, the low-latency traffic information includes, for example, at least one of TID bitmap information for determining whether transmission is possible, buffer information (Buffer status report (BSR)) for each TID, and QoS information.

In Embodiment 1, an AP indicates the low-latency traffic information on the MAP coordinated transmission in the R-TWT control information, for example, a frame including a TWT element (for example, FIG. 6), or a beacon signal or an association signal including the capability information on the MAP coordinated transmission and the capability information on R-TWT.

In Embodiment 2, an AP indicates the low-latency traffic information on the MAP coordinated transmission in non-R-TWT control information. Indication examples in a case where the low-latency traffic information on the MAP coordinated transmission is indicated in the non-R-TWT control information will be described below. In Embodiment 2, an AP can determine a low-latency traffic signal transmittable in the MAP coordinated transmission by using any method of the following indication examples to indicate the low-latency traffic information on the MAP coordinated transmission between APs.

[Indication Example 1 of Embodiment 2]

In Indication Example 1, the low-latency traffic information on the MAP coordinated transmission is indicated using a TID.

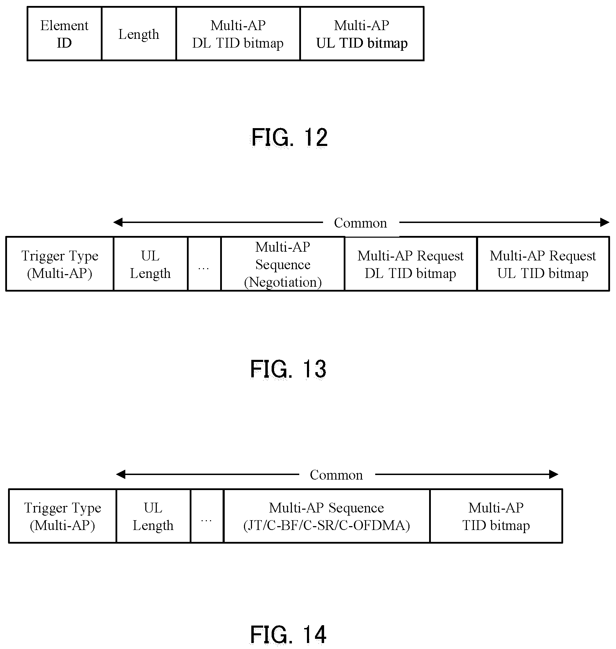

For example, the low-latency traffic information on the MAP coordinated transmission may be indicated in an element (or a frame, a subframe: hereinafter referred to as a management signal) different from the TWT element, as illustrated in FIG. 12. As an example, the management signal in FIG. 12 may be referred to as a Multi-AP Traffic element. An AP may transmit the management signal in FIG. 12 by causing the signal to be included in a management frame (for example, a Multi-AP Setup frame (not illustrated), a Multi-AP Reconfiguration frame (not illustrated), the Multi-AP coordinated transmission participation request/response signal in FIG. 9, and the like) for setting or starting an operation of Multi-AP. The Multi-AP DL TID bitmap and the Multi-AP UL TID bitmap included in the management signal in FIG. 12 indicate that, when each bit = 1, the TID corresponding to the bit is transmittable in the MAP coordinated transmission, and when each bit = 0, the TID corresponding to the bit is not transmittable in the MAP coordinated transmission.

Alternatively, the low-latency traffic information on the MAP coordinated transmission may be indicated in a Trigger frame. The low-latency traffic information on the MAP coordinated transmission to be indicated in the Trigger frame may be changed by the MAP coordinated transmission method (Multi-AP sequence).

Request information of a low-latency traffic signal related to the MAP coordinated transmission may be indicated in a control signal for the MAP coordinated transmission (for example, Multi-AP sequence = negotiation). FIG. 13 illustrates an example of signaling that indicates the low-latency traffic information on the MAP coordinated transmission in a control signal for the MAP coordinated transmission. The Multi-AP request DL TID bitmap and the Multi-AP request UL TID bitmap included in FIG. 13 indicate that, when each bit = 1, the TID corresponding to the bit is desired to be transmitted in the MAP coordinated transmission, and that, when each bit = 0, the TID corresponding to the bit is not desired to be transmitted in the MAP coordinated transmission.

The low-latency traffic information that can be used for the MAP coordinated transmission may be indicated in a transmission-start indication signal for the MAP coordinated transmission (for example, Multi-AP Sequence = JT/C-BF/C-SR/C-OFDMA). FIG. 14 illustrates an example of signaling that indicates the low-latency traffic information on the MAP coordinated transmission in the transmission-start indication signal for the MAP coordinated transmission. The Multi-AP TID bitmap included in FIG. 14 indicates a TID that can be used for the MAP coordinated transmission method indicated in the Multi-AP sequence. For example, in the Multi-AP TID bitmap, when each bit = 1, indicates that the corresponding TID is transmittable by the indicated MAP coordinated transmission method, and when each bit = 0, indicates that the corresponding TID is not transmittable inb the indicated MAP coordinated transmission. In FIG. 14, since DL/UL is also specified in the Multi-AP sequence, one bitmap for DL or UL is used, but two bitmaps respectively for DL and UL may be used.

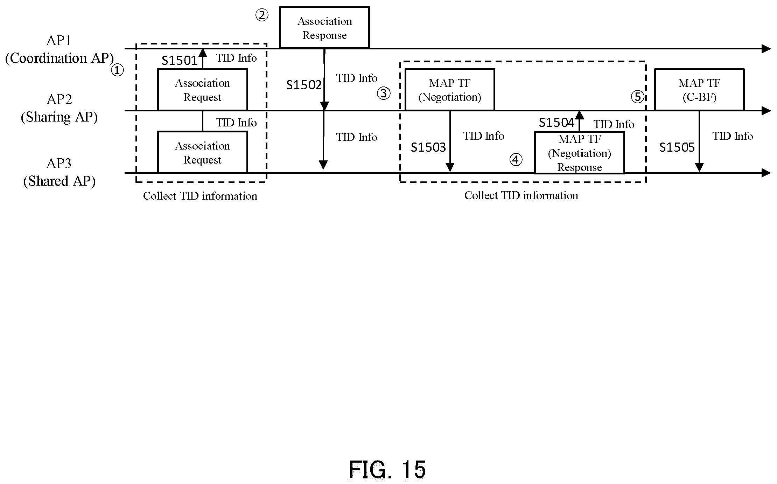

FIG. 15 illustrates an operation example in a case where the low-latency traffic information on the MAP coordinated transmission is indicated in a management signal. Note that FIG. 15 illustrates an example in which an Association request signal and an Association Response signal are used as the management signal, but the management signal is not limited to these and may be other frame types.

FIG. 15 illustrates an example in which three APs determine the low-latency traffic information (for example, TID) to be used for the MAP coordinated transmission using a management signal. In FIG. 15, APs 1 to 3 are included in a coordination group (for example, AP candidate set) composed of a plurality of APs, and AP 1 operates as a Coordination AP that leads the control of the coordination group.

In S1501, AP2 and AP3 indicate, to AP 1, an Association Request signal in order to participate in the coordination group controlled by AP 1. At this time, AP 2 and AP3 indicate, to AP 1, low-latency traffic information (for example, TID) of the low-latency traffic signal that they intend to use in the MAP coordinated transmission by causing the information to be included in an Association Request signal using the signaling in FIG. 12.

In S1502, AP 1 determines the low-latency traffic information (for example, TID) of the low-latency traffic signal to be used in the coordination group, based on the low-latency traffic information (for example, TID) of the low-latency traffic signal to be used for the MAP coordinated transmission included in the transmission signals of AP2 and AP3. AP 1 causes the low-latency traffic information (for example, TID) of the low-latency traffic signal that can be used in the coordination group to be included in an Association Response signal using the signaling in FIG. 12, and thus indicates the information AP 2 and AP3.

In S1503, AP 2, which acquires TXOP and operates as a Sharing AP, uses the signaling in FIG. 13 to indicate, to AP3, which is a Shared AP and constitutes a Virtual (Virtual) BSS with AP 2, request information on the low-latency traffic information (for example, TID) of t low-latency traffic signal to be used for the MAP coordinated transmission. The virtual BSS refers to a coordination group that actually performs the MAP coordinated transmission.

In S1504, AP3 that has received the request information on the low-latency traffic information (for example, TID) of the low-latency traffic signal to be used for the MAP coordinated transmission responds with the low-latency traffic information (for example, TID) of the low-latency traffic signal to be used for the MAP coordinated transmission using the signaling in FIG. 12.

In S1505, AP 2 determines the low-latency traffic information (for example, TID) that can be used for the MAP coordinated transmission method and the MAP coordinated transmission based on the low-latency traffic information (for example, TID) of the low-latency traffic signal intended to be used for the MAP coordinated transmission received from AP3, and indicates the information to AP3 using the signaling in FIG. 14.

As compared with the low-latency traffic information (for example, TID) indicated from the Coordination AP in S1502, the low-latency traffic information (for example, TID) can be determined in more detail through communication between the Sharing AP and the Shared AP that constitute the Virtual BSS (S1503 and S1504). Further, indicating the low-latency traffic information between APs using these methods makes it possible to determine the low-latency traffic information (for example, TID) transmittable in the MAP coordinated transmission.

[Indication Example 2 of Embodiment 2]

In Indication Example 2, the low-latency traffic information on the MAP coordinated transmission is indicated in buffer information.

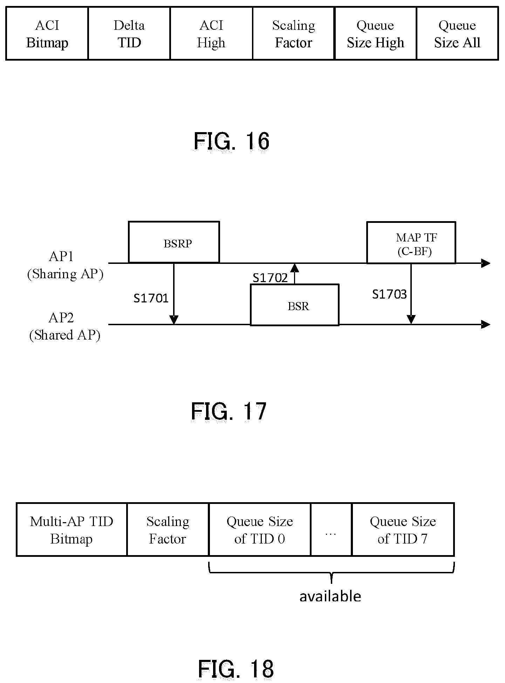

For example, the low-latency traffic information on the MAP coordinated transmission may be indicated using a BSR format illustrated in FIG. 16. For example, the buffer traffic amount of an AC indicated in Access category index (ACI) High included in signaling in FIG. 16 is indicated in Queue Size High.

FIG. 17 illustrates an operation example in a case where the low-latency traffic information on the MAP coordinated transmission is indicated in buffer information.

AP 1, which is a Sharing AP, may transmit, to AP 2, a BSR Polling (BSRP) in which destination information on AP 2 is included in an MAC header of BSRP or in AID12 of the user information and may request the transmission of the BSR, in order to transmit and receive the low-latency traffic information on the MAP coordinated transmission, for example (S1701).

AP 2 that has received the BSRP transmits the BSR to AP 1 (S1702).

AP 1 transmits, to AP 2, the low-latency traffic information transmittable in the MAP coordinated transmission method and the MAP coordinated transmission, based on the BSR indicated from AP 2 (S1703).

Further, the low-latency traffic information on the MAP coordinated transmission (queue size for each TID to be transmitted in MAP coordinated transmission) may be indicated by a combination of a TID bitmap and a BSR. This signaling example is illustrated in FIG. 18. In FIG. 18, when each bit of the Multi-AP TID Bitmap is 1, the buffer traffic amount of the TID corresponding to the bit is indicated by each Queue Size of TID $n$ ($n$ corresponds to the TID). Further, when each bit of the Multi-AP TID Bitmap is 0, the buffer traffic amount of the TID corresponding to the bit is not indicated.

[Indication Example 3 of Embodiment 2]

In Indication Example 3, the low-latency traffic information on the MAP coordinated transmission is indicated in QoS information. The QoS information includes, for example, at least one of a priority (for example, User priority), an allowable maximum delay amount (Delay Bound), quality information (MSDU Delivery Ratio), and the like.

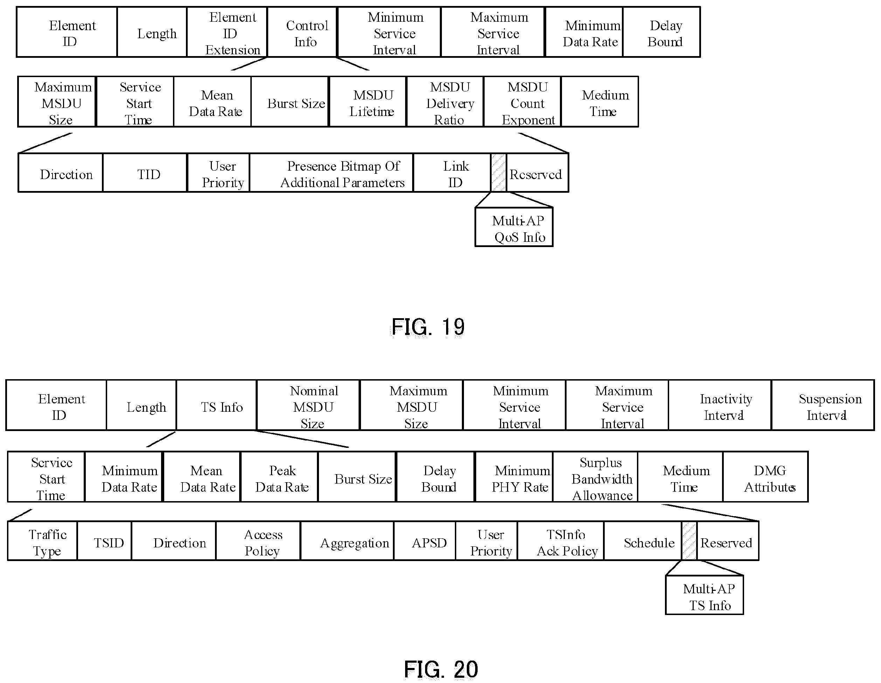

For example, the low-latency traffic information on the MAP coordinated transmission may be indicated in the QoS Characteristics element illustrated in FIG. 19. For example, a part of Reserved included in Control Info is used as MAP QoS Info, and it is thus indicated whether the information is the QoS information on the MAP coordinated transmission. For example, in a case of MAP QoS Info = 1, the information (for example, TID, User Priority, Delay Bound, MSDU Delivery Ratio, and the like) indicated in the QoS Characteristics element is the QoS information on the MAP coordinated transmission, and in a case of MAP QoS Info = 0, the information indicated in the QoS Characteristics element is QoS information on non-MAP coordinated transmission.

Further, for example, low-latency traffic information on the MAP coordinated transmission is indicated in a traffic specification (TSPEC) element illustrated in FIG. 20. For example, a part of Reserved included in Traffic Stream (TS) Info is used as MAP TS info, and it is indicated whether the information is the QoS information on the MAP coordinated transmission. For example, in a case where MAP TS Info = 1, the information indicated in the TSPEC element (for example, TID, User Priority, Delay Bound, and the like) may be QoS information on the MAP coordinated transmission. The Traffic Type included in TS Info may be used to indicate that the traffic signal is a periodic traffic signal related to the MAP coordinated transmission in a case of Traffic Type = 1, and to indicate that the traffic signal is a non-periodic traffic signal related to the MAP coordinated transmission in a case of Traffic Type = 0.

Further, for example, in a case of MAP TS Info = 0, the information indicated in the TSPEC element may be the QoS information on the non-MAP coordinated transmission.

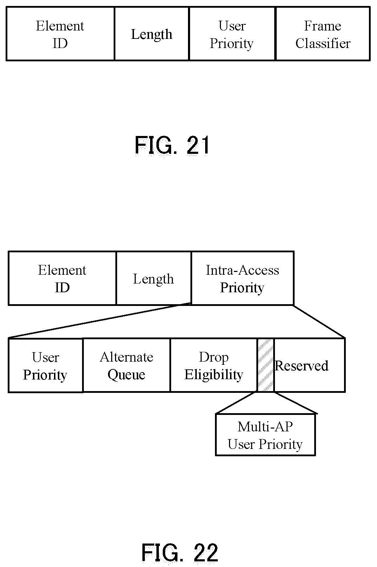

Further, for example, the low-latency traffic information on the MAP coordinated transmission may be indicated in a traffic classification (TCLAS) element illustrated in FIG. 21. For example, the priority and AC related to MAP coordinated transmission may be indicated using User Priority = 12 - 23, which is a part of the Reserved User Priority included in the TCLAS element, as indicated in Table 2.

[Table 2]

| User Priority | Meaning |
|---|---|
| 0 to 7 | The User Priority of an MSDU |
| 8 | The AC value of an MPDU is AC-VO |
| 9 | The AC value of an MPDU is AC-VI |
| 10 | The AC value of an MPDU is AC-BE |
| 11 | The AC value of an MPDU is AC-BK |
| 12 to 19 | The User Priority of an MSDU for Multi-AP |
| 20 | The AC value of an MPDU for Multi-AP is AC-VO |
| 21 | The AC value of an MPDU for Multi-AP is AC-VI |
| 22 | The AC value of an MPDU for Multi-AP is AC-BE |
| 23 | The AC value of an MPDU for Multi-AP is AC-BK |
| 24 to 254 | Reserved |
| 255 | The User Priority field is not used for comparison |

Further, for example, the low-latency traffic information on the MAP coordinated transmission may be indicated in the Intra-Access Category element illustrated in FIG. 22. For example, a part of Reserved included in Intra Access Priority may be MAP User Priority, and whether the User priority is the QoS information on the MAP coordinated transmission may be indicated by the MAP User Priority. For example, in a case of MAP User Priority = 1, the User priority indicated in the Intra-Access Category element may be the priority of a stream in an AC related to the MAP coordinated transmission, and in a case of MAP User Priority = 0, the User priority indicated in the Intra-Access Category element may be the priority of a stream in an AC related to the non-MAP coordinated transmission.

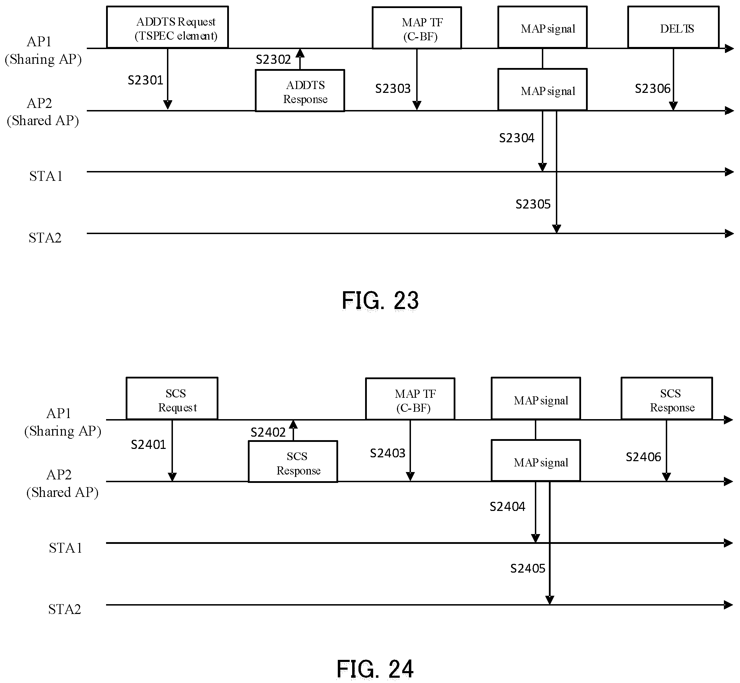

FIG. 23 illustrates an operation example in a case where the low-latency traffic information on the MAP coordinated transmission is indicated using a TSPEC element.

AP 1, which is the Sharing AP, transmits an add Traffic Stream (ADDTS) Request including the TSPEC element in which QoS information for a case of transmitting a low-latency traffic signal in the desired MAP coordinated transmission is configured, to AP 2, which is the Shared AP (S2301).

AP 2 receives the ADDTS Request and indicates the acceptance or rejection of the MAP coordinated transmission described in TSPEC with an ADDTS Response (S2302).

AP 1 that has received the ADDTS Response transmits, to AP 2, a MAP Trigger frame including control information (for example, at least one of MCS, an error correction method, and the like) that satisfies the QoS information indicated in the TSPEC element (S2303).

AP 1 and AP 2 perform the MAP coordinated transmission in accordance with the control information indicated in the MAP Trigger frame (S2304 and S2305).

AP 1 transmits a delete TS (DELTS) signal and indicates the end of communication that satisfies the QoS information indicated in the TSPEC element (S2306).

Note that, in FIG. 23 an example has been given in which the Sharing AP transmits the ADDTS Request to the Shared AP, but the Shared AP may transmit the ADDTS Request to the Sharing AP.

FIG. 24 illustrates an operation example in a case where the low-latency traffic information on the MAP coordinated transmission is indicated using a control signal for a Stream Classification Service (SCS).

AP 1, which is the Sharing AP, transmits an SCS Request signal including QoS information for a case of transmitting low-latency traffic in the desired MAP coordinated transmission to AP 2, which is a Shared AP (S2401).

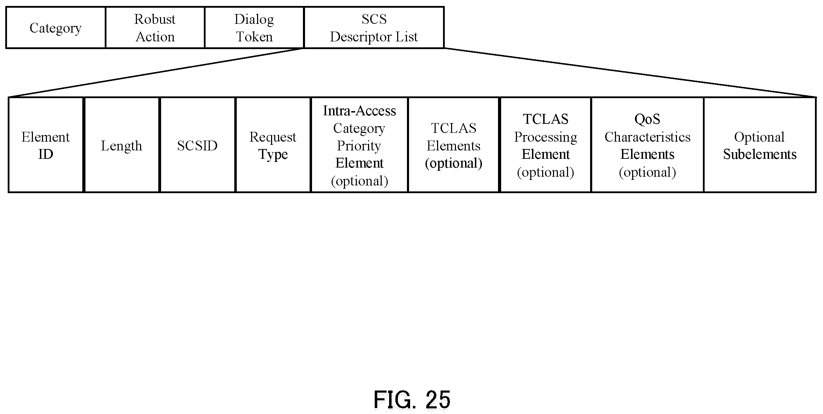

For example, AP 1 indicates the SCS Descriptor List by causing the SCS Descriptor List to be included in the SCS Request, as illustrated in FIG. 25. For example, the User Priority for the MAP coordinated transmission may be indicated using a TCLAS element included in the SCS Descriptor List, as illustrated in FIG. 21. Further, a priority of a stream in an AC of the MAP coordinated transmission may be indicated using the Intra-Access Category priority element in the SCS Descriptor List, as illustrated in FIG. 22. Further, the QoS information for the MAP coordinated transmission may be indicated by causing the QoS Characteristics element to be included in the SCS Request.

AP 2 that has received the SCS Request indicates, to AP1, the acceptance or rejection of the MAP coordinated transmission included in the SCS Request signal by causing the acceptance or rejection to be included in the SCS Response (S2402).

AP 1 that has received the SCS Request transmits, to AP 2, a MAP Trigger frame including control information that satisfies the QoS information indicated in the SCS Request (S2403).

AP 1 and AP 2 perform the MAP coordinated transmission in accordance with the control information indicated in the MAP Trigger frame (S2404 and S2405).

AP 1 indicates, in the SCS Response, the end of SCS transmission that satisfies the QoS information indicated in the SCS Request (S2406).

Note that, in FIG. 24, an example has been given in which the Sharing AP transmits the SCS Request to the Shared AP, but the Shared AP may transmit the SCS Request to the Sharing AP. Further, a series of SCS transmission starting with the SCS Request may be performed during the QoS communication period using the TSPEC element. For example, after the transmission of the ADDTS Response to the ADDTS Request, an SCS Request may be transmitted. Further, the QoS Characteristics element may be included in the TWT element related to the R-TWT coordination illustrated in FIG. 6, and QoS information on a transmission signal in the duration of the R-TWT SP may be indicated.

[Control Method 1 of Embodiment 2]

A method will be described in which an AP determines the low-latency traffic information that can be used for the MAP coordinated transmission, based on low-latency traffic information of other terminals (AP and STA).

For example, an AP (Coordination AP and Sharing AP) that controls the MAP coordinated transmission determines the low-latency traffic information that can be used for the MAP coordinated transmission, using the low-latency traffic information of another AP.

Specifically, the low-latency traffic information that can be used for the MAP coordinated transmission may be determined by the logical OR or logical AND of the TID bitmaps of the APs. Further, the low-latency traffic information that can be used for the MAP coordinated transmission may be determined based on the total value of the buffer traffic amounts for the respective TIDs.

Further, the AP may determine the low-latency traffic information to be transmitted to another AP based on the low-latency traffic information of an STA. For example, the AP may derive a BSR for each BSS (hereinafter referred to as "BSS BSR") based on BSRs of all subordinate STAs and then indicate the BSR to the other AP.

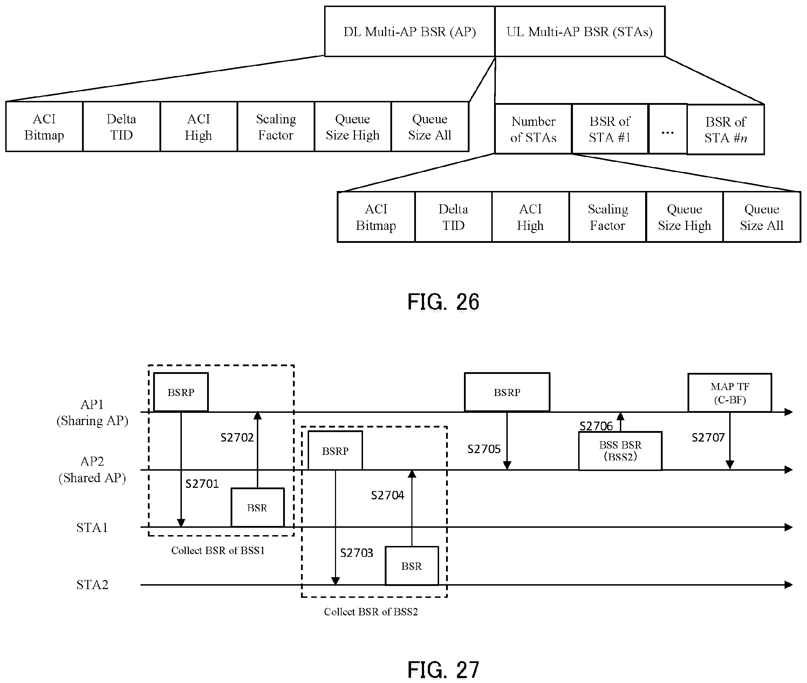

An exemplary BSS BSR is illustrated in FIG. 26. The BSS BSR includes a BSR of an AP in the DL MAP BSR and includes the Number of STAs indicating the number of STAs under the control of the AP and the BSR of each STA in the UL MAP BSR. Further, the DL/UL MAP BSR included in the BSS BSR may use signaling in which a TID bitmap and a BSR is combined as illustrated in FIG. 18. Further, the DL MAP BSR included in the BSS BSR may indicate the total value of the buffer traffic amounts of all STAs in one BSS, or may indicate the total value of the buffer traffic amounts of STAs participating in a specific MAP coordinated transmission (or STAs not participating in the specific MAP coordinated transmission).

An operation example of Control Method 1 in Embodiment 2 is illustrated in FIG. 27.

In FIG. 27, each AP (for example, AP 1 and AP 2) transmits BSRP to its respective subordinate STAs (for example, STA 1 and STA 2) (S2701 and S2703), and each STA (for example, STA 1 and STA2) transmits BSR to the AP to which the STA belongs (S2702 and S2704).

AP 1, which has acquired TXOP and has become the Sharing AP, transmits a BSRP to AP 2 and requests transmission of a BSS BSR related to BSS 2 to which AP 2 belongs (S2705).

AP 2 that has received the BSRP transmits a BSS BSR to AP 1 (S2376).

AP 1 determines the low-latency traffic information to be used for the MAP coordinated transmission between AP 1 and AP 2 based on the BSS BSR received from AP 2 and then indicates, to AP2, the low-latency traffic information transmittable together with the MAP coordinated transmission method in the MAP Trigger frame (S2707).

Control Method 1 of Embodiment 2 makes it possible to determine the low-latency traffic information to be used for the MAP coordinated transmission through negotiation between the APs, based on the BSRs of the AP and STA belonging to another BSS. In particular, in UL MAP coordinated transmission, the low-latency traffic information to be transmitted by the STA can appropriately be determined.

[Control Method 2 of Embodiment 2]

In Control Method 2 of Embodiment 2, an AP controls the MAP coordinated transmission based on the low-latency traffic information.

In Control Method 2-1, for example, a control AP (for example, Sharing AP) for the MAP coordinated transmission is determined depending on the presence or absence of the low-latency traffic information. In 11be, it has been known that an AP that has acquired TXOP can control the MAP coordinated transmission as a Sharing AP, but according to Control Method 2-1, the Sharing AP may be changed to another AP based on the low-latency traffic information of the other AP.

For example, when the number of bits indicating one included in the TID bitmap or the buffer traffic amount is larger in another AP, the Sharing AP may be changed to the other AP.

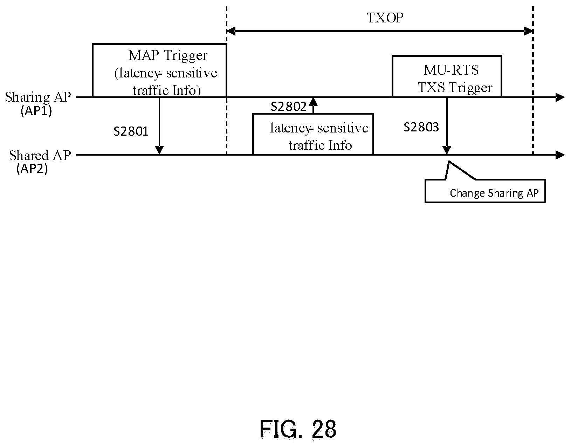

This operation example is illustrated in FIG. 28. In FIG. 28, the Sharing AP (for example, AP 1) that has acquired TXOP transmits a MAP Trigger frame to indicate its own low-latency traffic information and requests another AP (for example, Shared AP, i.e., AP 2) to transmit low-latency traffic information (S2801).

The Shared AP (for example, AP 2) transmits the low-latency traffic information in response to the MAP Trigger frame (S2802).

The Sharing AP (for example, AP 1) that has received the low-latency traffic information of the Shared AP may transmit a Multi-User-Request to Send TXOP Sharing (MU-RTS TXS) Trigger frame to the Shared AP (for example, AP 2) when the low-latency traffic information of the Shared AP (for example, AP 2) is larger than the low-latency traffic information of itself (for example, AP 1) (S2803), and may transfer the control right of TXOP to the Shared AP (for example, AP 2) and change the Shared AP (for example, AP 2) into the Sharing AP. The subject AP (for example, AP 1) operates as a Shared AP after the transmission of the MU-RTS TXS Trigger frame.

In Solution 2-1, the APs perform transmission and reception of low-latency traffic between each other, and the control right of TXOP is transferred to the AP with a large amount of low-latency traffic, causing this AP to operate as a Sharing AP, which allowes the Sharing AP to schedule the transmission of low-latency traffic with priority.

In Control Method 2-2, a control AP (for example, Sharing AP) determines an AP that participates in the MAP coordinated transmission depending on the presence or absence of the low-latency traffic information.

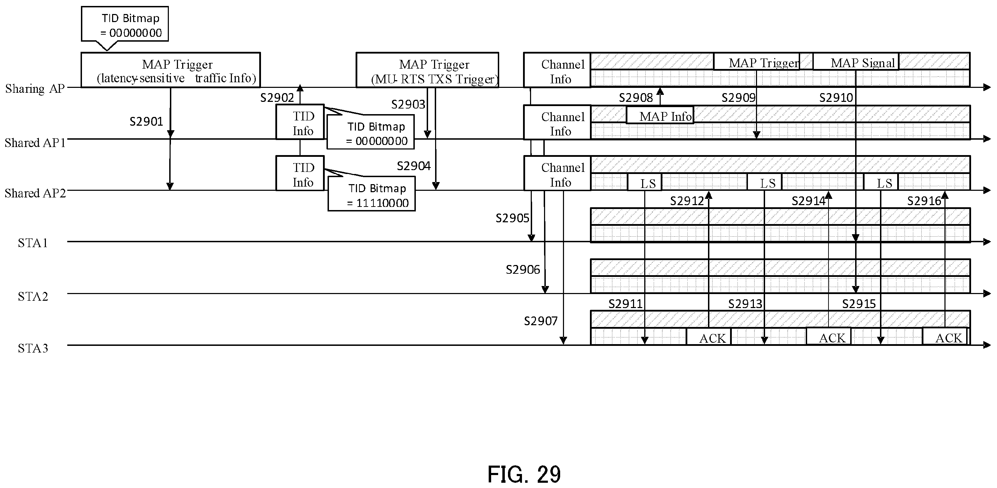

Specifically, the Sharing AP determines that an AP having no low-latency traffic signal (or having a small number of low-latency traffic signals) participates in the MAP coordinated transmission, based on the low-latency traffic information of another AP. On the other hand, the Sharing AP determines that an AP having a low-latency traffic signal (or an AP having a large number of low-latency traffic signals) does not participate in the MAP coordinated transmission. At this time, the Sharing AP allocates different frequency resources to the MAP coordinated transmission and the non-MAP coordinated transmission. This operation example is illustrated in FIG. 29.

In FIG. 29, the Sharing AP that has acquired the TXOP transmits a MAP Trigger frame, indicates its own low-latency traffic information, and requests other APs (for example, Shared AP 1 and Shared AP 2) to transmit low-latency traffic information (S2901).

Each Shared AP transmits low-latency traffic information in response to the MAP Trigger frame (S2902).

For example, the TID bitmap included in the low-latency traffic information of the Sharing AP and Shared AP 1 is 00000000, and the TID bitmap included in the low-latency traffic information of Shared AP 2 is 11110000.

At this time, the Sharing AP determines to participate in the MAP coordinated communication based on the TID bitmap of each AP, because the Sharing AP and Shared AP 1 do not have (have few) low-latency traffic signals, but determine not to participate in the MAP coordinated communication because Shared AP 2 has (has many) low-latency traffic signals.

The Sharing AP indicates control information (for example, frequency resource information) on the MAP coordinated transmission of the Sharing AP and Shared AP 1 in the MAP Trigger frame based on the TID bitmap of each AP (S2903), and indicates control information (for example, frequency resource information) on the low-latency traffic transmission of Shared AP 2 in the MU-RTS TXS Trigger frame (S2904).

The Sharing AP and each Shared AP indicate, to the subordinate STAs, channel information (for example, Primary channel number or frequency bandwidth) including the frequency resource information used for the MAP coordinated transmission and the transmission of a low-latency traffic signal (S2905, S2906, and S2907).

The Sharing AP and Shared AP 1 perform the MAP coordinated transmission. For example, Shared AP 1 transmits control information on the MAP coordinated transmission to the Sharing AP (S2908), and the Sharing AP transmits a MAP Trigger frame including the control information on the MAP coordinated transmission (for example, the type and transmission timing of MAP coordinated transmission and the destination STA information) to the Shared AP (S2909).

The Sharing AP and Shared AP 1 transmit a MAP coordination signal to subordinate STAs (for example, STA 1 and STA 2) based on the control information included in the MAP Trigger frame (S2910).

On the other hand, Shared AP 2, which transmits a low-latency traffic signal, consecutively transmits a low-latency traffic (Latency sensitive (LS)) signal to a subordinate STA (for example, STA 3) using the allocated frequency resource (S2911, S2913, and S2915).

The STA under the control of Shared AP 2 (for example, STA 3) transmits an ACK to LS (S2912, S2914, and S2916).

In Solution 2-2, by determining an AP that participates in the MAP coordinated transmission depending on the presence or absence of the low-latency traffic signal, it is possible to perform the MAP coordinated control based on the transmission request for the low-latency traffic signal from each AP. For example, an AP that intend to transmit the low-latency traffic signal can consecutively transmit the low-latency traffic signal in non-MAP coordinated transmission. Further, an AP that does not transmit the low-latency traffic signal can improve the communication quality through the MAP coordinated transmission.

In Control Method 2-3, the control information on C-SR is changed depending on the presence or absence of the low-latency traffic signal. Three examples of the control information for C-SR will be described.

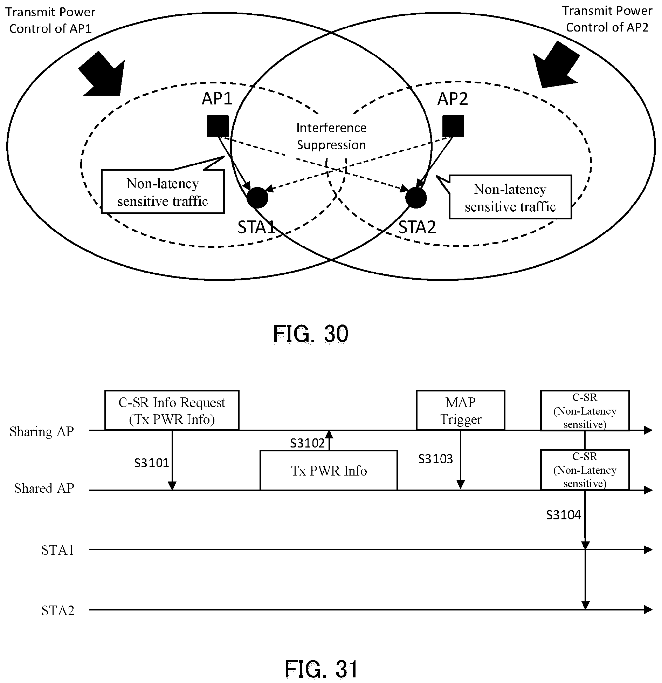

The first example determines the transmission power control method for C-SR depending on the presence or absence of the low-latency traffic signal. Each AP (for example, AP 1 and AP 2) that participates in the coordinated control on C-SR performs the transmission power control when the transmission signal for C-SR to be transmitted is a non-low-latency traffic signal (that is, no low-latency traffic is included). A schematic diagram of C-SR at this time is illustrated in FIG. 30.

Further, an operation example of C-SR in this case is illustrated in FIG. 31.

In FIG. 31, the Sharing AP transmits a C-SR Info Request, which requests the transmission of transmission power control information, to Shared AP (S3101).

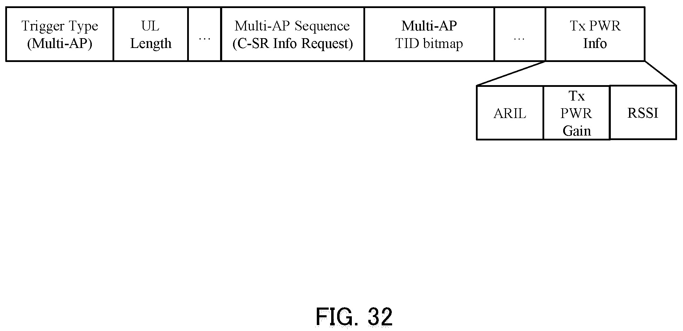

FIG. 32 illustrates an example of signaling of a C-SR Info Request. The C-SR Info Request may be a type of MAP Trigger frame, and in the case of MAP Sequence = C-SR Info Request, it is identified as the C-SR Info Request. The C-SR Info Request includes a MAP TID bitmap that indicates the presence or absence of a low-latency traffic signal related to the MAP coordinated transmission and also includes Tx Power (PWR) Info that indicates information that is necessary for the transmission power control. Tx PWR Info includes, for example, an acceptable receiver interference level (ARIL) of the destination STA, a transmission power gain of an AP (Tx PWR Gain), and a received signal strength indicator (RSSI) of an STA.

The Shared AP that has received the C-SR Info Request transmits a signal including the Tx PWR Info (for example, a beacon signal) to the Sharing AP (S3102).

The Sharing AP determines the transmission power of each AP in C-SR based on the Tx PWR Info of the Shared AP, and indicates the determined transmission power to the Shared AP by causing the transmission power being included in the MAP Trigger frame (S3103).

The Sharing AP and the Shared AP transmit signals including a non-low-latency traffic signal in the transmission power information indicated in the MAP Trigger frame (S3104).

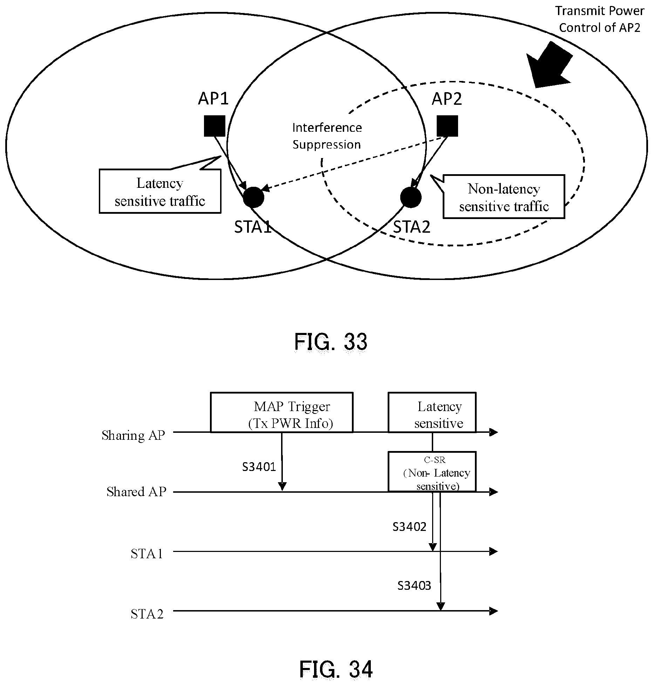

In a case where an AP (for example, AP 1) includes the low-latency traffic signal in the transmission signal for C-SR, the other AP (for example, AP 2) transmits the non-low-latency traffic signal (that is, no low-latency traffic signal is included ) without performing the transmission power control. A schematic diagram of C-SR at this time is illustrated in FIG. 33.

In FIG. 33, AP 1 is a Sharing AP, and AP 2 is a Shared AP. Additionally, FIG. 34 illustrates an operation example of C-SR when the Sharing AP transmits the low-latency traffic signal.

In FIG. 34, since the Sharing AP transmits the low-latency traffic signal, the Shared AP is permitted to transmit only non-low-latency traffic. In other words, an AP that transmits a low-latency traffic signal indicates, to another AP, transmission power control information, while an AP that transmits a non-low-latency traffic signal does not indicate, to another AP, the transmission power control information.

For example, the Sharing AP transmits a MAP TID bitmap including one in any bit and a MAP Trigger frame including Tx PWR Info, and indicates, to the Shared AP, the transmission power control information (S3401).

After transmitting the MAP Trigger frame, the Sharing AP transmits a low-latency traffic signal without performing the transmission power control (S3402).

Further, the Shared AP determines, from the MAP Trigger frame received from the Sharing AP, that the Sharing AP transmits a low-latency traffic signal. The Shared AP performs the transmission power control based on the transmission power control information and thus transmits a non-low-latency traffic signal in order to reduce interference with an STA that receives the low-latency traffic signal (S3403).

An example has been described in which only an AP that transmits the non-low-latency traffic signal performs the power control in a case where the transmission signal of C-SR includes the low-latency traffic signal, but each AP may perform the transmission power control. In this case, the transmission power control information is transmitted and received between the APs as in the operation example illustrated in FIG. 31. The Sharing AP may perform scheduling such that the transmission power of an AP that transmits the low-latency traffic signal becomes greater than the transmission power of an AP that transmits the non-low-latency traffic signal.

In the first example of Control Method 2-3, the transmission power control method for C-SR is determined depending on the presence or absence of the low-latency traffic signal, thereby reducing interference with the low-latency traffic signal and improving the reception quality of the low-latency traffic signal.

The second example changes a transmission timing of the non-low-latency traffic signal in a case of C-SR, which includes the transmission of the low-latency traffic signal.

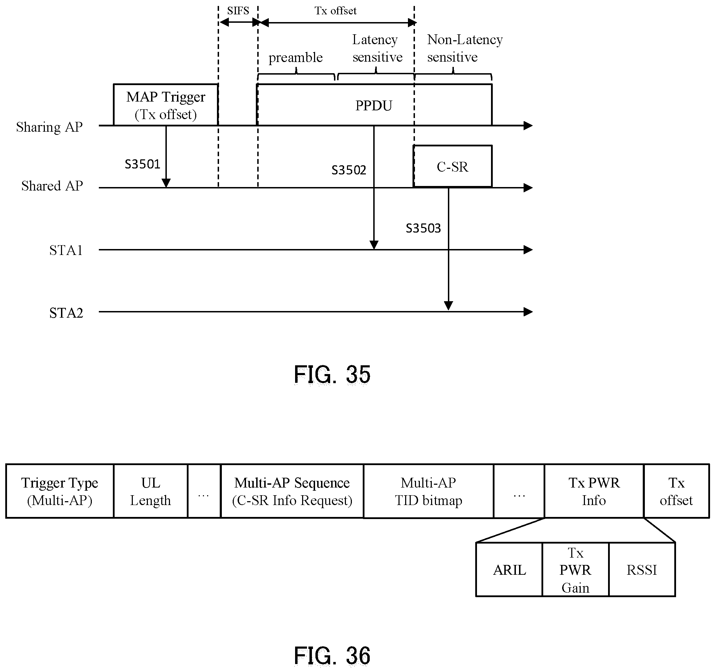

At this time, the AP may indicate the transmission timing of the low-latency traffic signal to be transmitted in the C-SR. For example, FIG. 35 illustrates an operation example in a case where the transmission timing is indicated by a time offset. In FIG. 35, the Sharing AP indicates the time offset using a MAP Trigger frame as illustrated in FIG. 36.

For example, in a case where the Sharing AP indicates that a low-latency traffic signal is to be transmitted, the Sharing AP may transmit a MAP Trigger frame in which any bit of the MAP TID bitmap included in the signaling of FIG. 36 is one (S3501). Further, in a case where any bit of the MAP TID bitmap is one, a Tx offset may be included. The Tx offset indicates a time length from a Short Interframe Space (SIFS) after the transmission of the MAP Trigger frame. The Sharing AP transmits a frame (PPDU) including the low-latency traffic signal before the Tx offset and including the non-low-latency traffic signal after the Tx offset (S3502).

After the passage of the time indicated by the Tx offset, the Shared AP transmits a C-SR signal subj ected to the transmission power control, at the same timing as the timing at which the Sharing AP transmits the non-low-latency traffic signal (S3503).

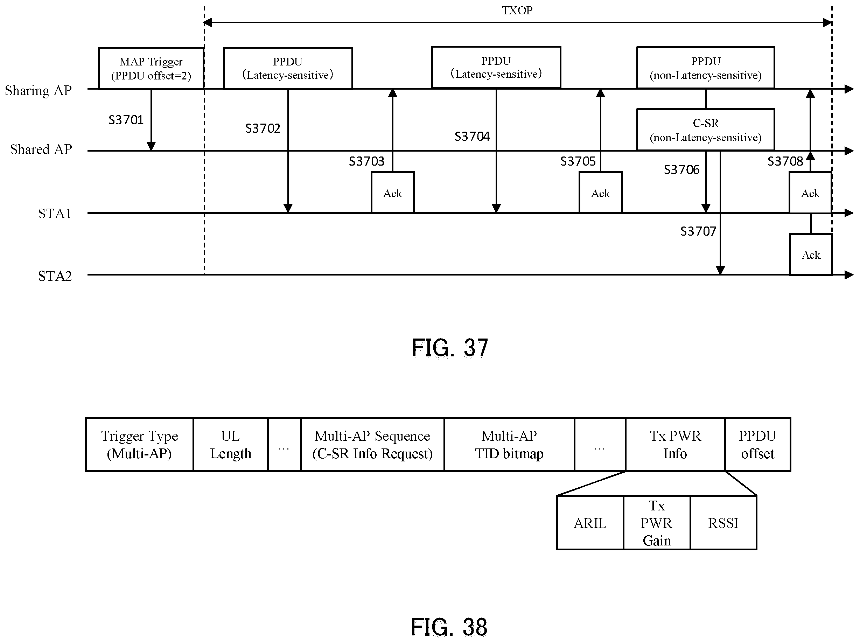

Further, FIG. 37 illustrates an operation example in which the transmission timing is indicated by the number of data units (the number of PPDUs) and the number of PPDUs is two. In FIG. 37, the Sharing AP indicates the number of data units using for example, the MAP Trigger frame in FIG. 38 (S3701).

For example, in a case where the Sharing AP indicates the transmission of a low-latency traffic signal, the Sharing AP may transmit a MAP Trigger frame in which any bit of the MAP TID bitmap included in the signaling in FIG. 38 is one. Further, in a case where any bit of the MAP TID bitmap is one, a PPDU offset may be included.

After the transmission of the MAP Trigger frame, the Sharing AP transmits the low-latency traffic signals as much as the number of PPDUs indicated by the PPDU offset (S3702 and S3704), and after transmitting the number of PPDUs indicated by the PPDU offset, transmits a non-low-latency traffic signal (S3706).

After the passage of the number of PPDUs indicated by the PPDU offset, the Shared AP transmits a C-SR signal subjected to the transmission power control at the same timing as the timing at which the Sharing AP transmits the non-low-latency traffic signal (S3707).

When receiving the PPDU and the C-SR signal, each STA transmits an ACK (S3703, S3705, and S3708).

In the second example, by indicating the transmission timing and thus avoiding a plurality of APs from transmitting at the transmission timing of the low-latency traffic signal, it is possible to suppress interference with the low-latency traffic signal and improve the reception quality of the low-latency traffic signal.

The third example changes a Parameterized Spatial Reuse (PSR) table (value of transmission power control information (PSR) for Value) depending on the presence or absence of the low-latency traffic signal.

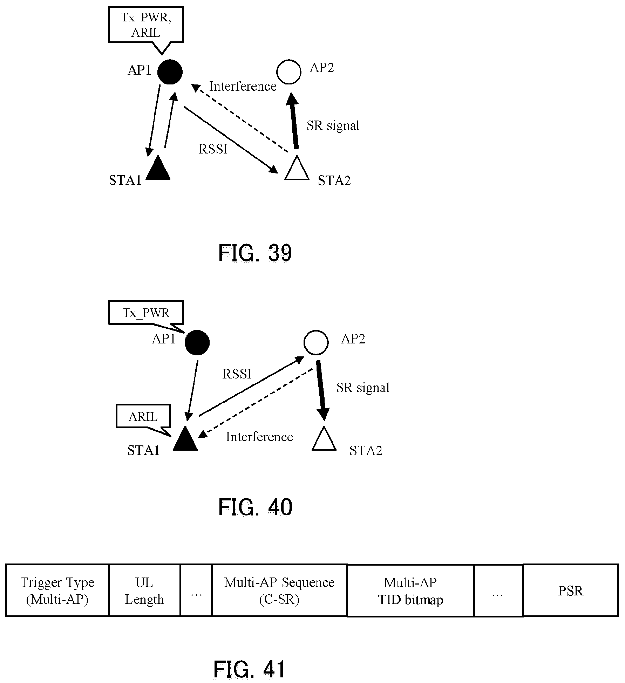

FIG. 39 is a schematic diagram of a PSR-based SR in 11ax. In FIG. 39, STA2 performs PSR-based SR transmission to AP 2 in order to reduce the interference with AP 1. At this time, the transmission power of STA 2 (TX $PWR_{STA2}$) is determined by Equation 1. Further, the SRP used in Equation 1 is determined by Equation 2:

$$X\,PWR_{STA2} < SRP - RSSI_{AP1\text{-}STA2} \qquad ...\ Equation\ 1;$$

and

$$RP = TX\,PWR_{AP1} + ARIL_{AP1} \qquad ...\ Equation\ 2.$$

FIG. 40 is a schematic diagram of DL C-SR in 11be. In FIG. 40, AP 2 performs C-SR transmission to STA2 in order to reduce the interference with STA 1. At this time, transmission power of AP 2, $TXPWR_{AP2}$, is determined by Equation 3. Further, the SRP is determined by Equation 4:

$$X\,PWR_{AP2} < SRP - RSSI_{AP2\text{-}STA1} \qquad ...\ Equation\ 3;$$

and

$$RP = TX\,PWR_{AP1} + ARIL_{STA1} \qquad ...\ Equation\ 4.$$

In general, the reception performance of an STA is considered to be lower than that of an AP, and thus, $ARIL_{STA1}$ is expected to be smaller than $ARIL_{AP1}$. When TX $PWR_{AP1}$ is constant, it is considered that the value of PSR in DL C-SR becomes smaller than that of PSR-based SR by the difference in ARIL between the AP and the STA. Further, in C-SR in which a low-latency traffic signal is transmitted, it is necessary to sufficiently suppress interference with the low-latency traffic signal.

For this reason, when the low-latency traffic signal is transmitted in DL C-SR, the value of PSR is replaced with. For example, DL C-SR transmission is indicated in the signaling illustrated in FIG. 41. In a case where any bit of the MAP TID bitmap included in FIG. 41 is one, the value of PSR for Value is replaced with the value on the right side of Table 3.

Further, the value of PSR may be indicated in the common information of the Trigger frame or may be indicated in the user information.

[Table 3]

| Value | Non-latency sensitive | Latency-sensitive |
|---|---|---|
| 0 | PSR DISALLOW | PSR DISALLOW |
| 1 | PSR = -80 dBm | PSR = -98 dBm |
| 2 | PSR = -74 dBm | PSR = -95 dBm |
| 3 | PSR = -68 dBm | PSR = -92 dBm |
| 4 | PSR = -62 dBm | PSR = -89 dBm |
| 5 | PSR = -56 dBm | PSR = -86 dBm |
| 6 | PSR = -50 dBm | PSR = -83 dBm |
| 7 | PSR = -47 dBm | PSR = -80 dBm |
| 8 | PSR = -44 dBm | PSR = -77 dBm |
| 9 | PSR = -41 dBm | PSR = -74 dBm |
| 10 | PSR = -38 dBm | PSR = -71 dBm |
| 11 | PSR = -35 dBm | PSR = -68 dBm |
| 12 | PSR = -32 dBm | PSR = -65 dBm |
| 13 | PSR = -29 dBm | PSR = -62 dBm |
| 14 | PSR = -26 dBm | PSR = -59 dBm |
| 15 | PSR_AND_NON_SRG_OB SS_PD_PROHIBIT | PSR_AND_NON_SRG_OB SS_PD_PROHIBIT |

In the third example, a PSR table suitable for a DL low-latency traffic signal is referenced, which allows the C-SR transmission signal power to be reduced, thereby reducing interference with the DL low-latency traffic signal.

[Variation]

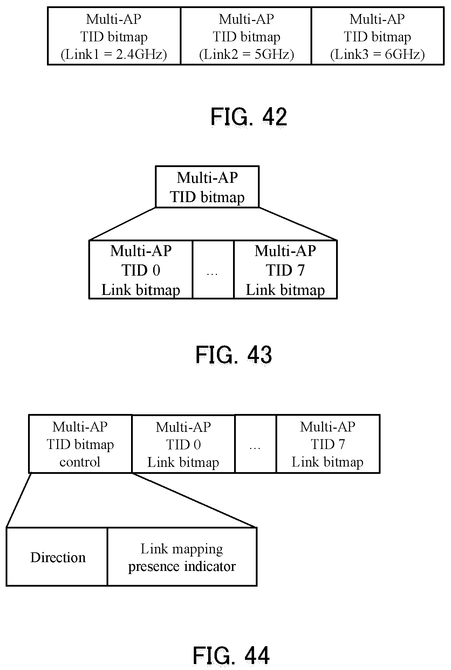

In any embodiment, the low-latency traffic information may be indicated for each link. For example, an AP Multi-link device (MLD) indicates, to another AP MLD, the low-latency traffic information on the MAP coordinated transmission for each link. FIGS. 42, 43, and 44 each illustrate an example of signaling that indicates the low-latency traffic information on the MAP coordinated transmission for each link.

The signaling in FIG. 42 is an example of indicating a TID bitmap for each link (for example, 2.4 GHz band, 5 GHz band, and 6 GHz band). The MAP TID bitmap is included as much as the number of links, and the bits of each TID bitmap corresponds to TIDs.

The signaling in FIG. 43 is an example of indicating a bitmap of a link for each TID. The bits in a MAP TID n Link bitmap (letter n corresponds to TID) correspond to each link.

The signaling in FIG. 44 is an example of indicating a bitmap of a link for each TID in control information. The Direction indicates the communication direction (for example, uplink, downlink, or both uplink and downlink) of each Link bitmap. Further, the Link mapping presence indicator indicates whether a bitmap corresponding to each TID is included. For example, in a case where the bit of the Link mapping presence indicator is one, a corresponding MAP TID n Link bitmap is included. Using the signaling in FIGS. 42, 43, and 44 makes it possible to determine a TID that can be used for the MAP coordinated transmission for each link.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, an ultra LSI, or system on chip (SoC) depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A communication apparatus according to an exemplary embodiment of the present disclosure includes: a controller that generates low-latency traffic information on Multi- Access Point (MAP) coordinated transmission; and a radio transmitter that transmits the generated low-latency traffic information.

In the communication apparatus according to an exemplary embodiment of the present disclosure, the low-latency traffic information includes information on a traffic signal with a priority, information on a traffic signal with a large buffer queue size, information on a traffic signal with a small allowable delay amount, and/or information on a traffic signal with a high required quality.

The communication apparatus according to an exemplary embodiment of the present disclosure is an access point (AP) and transmits the low-latency traffic information in Restricted-Target Wake Time (R-TWT) control information.

The communication apparatus according to an exemplary embodiment of the present disclosure is an access point and transmits the low-latency traffic information in non-R-TWT control information.

In the communication apparatus according to an exemplary embodiment of the present disclosure, the non-R-TWT control information is indicated using a Traffic Identifier (Till).

In the communication apparatus according to an exemplary embodiment of the present disclosure, the TID is included in a management signal.

In the communication apparatus according to an exemplary embodiment of the present disclosure, the TID is indicated in a trigger frame.

In the communication apparatus according to an exemplary embodiment of the present disclosure, the trigger frame is a trigger frame for Multi-AP management.

In the communication apparatus according to an exemplary embodiment of the present disclosure, the non-R-TWT control information is buffer information.

In the communication apparatus according to an exemplary embodiment of the present disclosure, the low-latency traffic information is indicated by a combination of a TID bitmap and the buffer information.

In the communication apparatus according to an exemplary embodiment of the present disclosure, the non-R-TWT control information is Quality of Service (QoS) information.

The communication apparatus according to an exemplary embodiment of the present disclosure further includes a radio receiver that receives low-latency traffic information from another communication apparatus, in which the controller determines traffic information that is usable for the Multi-AP coordinated transmission based on the low-latency traffic information from the other communication apparatus.

In the communication apparatus according to an exemplary embodiment of the present disclosure, the controller determines the traffic information that is usable for the Multi-AP coordinated transmission based on the low-latency traffic information from the other communication apparatus in a case where the communication apparatus is a control AP.

In the communication apparatus according to an exemplary embodiment of the present disclosure, the communication apparatus is an AP, and the controller determines low-latency traffic information to be indicated to the other AP based on low-latency traffic information of a terminal.

In the communication apparatus according to an exemplary embodiment of the present disclosure, the low-latency traffic information to be indicated to the other AP is a Buffer Status Report (BSR) in a Basic Service Set (BSS) unit.

The communication apparatus according to an exemplary embodiment of the present disclosure further includes a radio receiver that receives low-latency traffic information from another communication apparatus, in which the controller performs control on the Multi-AP coordinated transmission based on the low-latency traffic information from the other communication apparatus.

In the communication apparatus according to an exemplary embodiment of the present disclosure, the control on the Multi-AP coordinated transmission is determination of a control AP.

In the communication apparatus according to an exemplary embodiment of the present disclosure, the control on the Multi-AP coordinated transmission is determination of an AP that participates in the Multi-AP coordinated transmission.

The communication apparatus according to an exemplary embodiment of the present disclosure further includes a radio receiver that receives low-latency traffic information from another communication apparatus, in which the controller changes a method of performing control on Coordinated Spatial Reuse (C-SR) of the Multi-AP coordinated transmission, based on the low-latency traffic information from the other communication apparatus.

In the communication apparatus according to an exemplary embodiment of the present disclosure, the control on the C-SR is determination of whether to perform transmission power control depending on the presence or absence of low-latency traffic information.

In the communication apparatus according to an exemplary embodiment of the present disclosure, the control on the C-SR is determination of a transmission timing depending on the presence or absence of low-latency traffic information.

In the communication apparatus according to an exemplary embodiment of the present disclosure, the control on the C-SR is a change in transmission power control information depending on the presence or absence of low-latency traffic information.

In the communication apparatus according to an exemplary embodiment of the present disclosure, the low-latency traffic information is low-latency traffic information for each link.

In the communication apparatus according to an exemplary embodiment of the present disclosure, the low-latency traffic information for each link is a TID bitmap for each link.

In the communication apparatus according to an exemplary embodiment of the present disclosure, the low-latency traffic information for each link is a Link bitmap for each TID.

In the communication apparatus according to an exemplary embodiment of the present disclosure, the low-latency traffic information for each link includes the presence or absence of a Link bitmap for each TID in control information.

A communication method according to an exemplary embodiment of the present disclosure includes: generating, by a communication apparatus, low-latency traffic information on coordinated transmission; and transmitting, by the communication apparatus, the generated low-latency traffic information.

The disclosure of Japanese Patent Application No. 2022-131168, filed on August 19, 2022, including the specification, drawings and abstract, is incorporated herein by reference in its entirety.

Industrial Applicability

An embodiment of the present disclosure is useful for radio communication systems.

    401, 501, 1001, 1101 Reception antenna
    402, 502, 1002, 1102 Radio receiver
    403, 503, 1003, 1103 Preamble demodulator
    404, 504, 1004, 1104 Data demodulator
    405, 505, 1005, 1105 Data decoder
    406 R-TWT controller
    407, 1007 Multi-AP coordinated controller
    408, 1008 Scheduler

409, 1009 Data generator
410, 1010 Data encoder
411, 1011 Data modulator
412, 1012 Preamble generator
413, 508, 1013, 1108 Radio transmitter
414, 509, 1014, 1109 Transmission antenna
506 Power saving mode controller
507, 1107 Transmission signal generator
1006, 1106 Low-latency traffic controller

**Claims**

1. A communication apparatus, comprising:

    a controller that generates low-latency traffic information on coordinated transmission; and
    a radio transmitter that transmits the generated low-latency traffic information.

2. The communication apparatus according to claim 1, wherein the low-latency traffic information includes at least one of information on a traffic signal with a priority, information on a traffic signal with a large buffer queue size, information on a traffic signal with a small allowable delay amount, and/or information on a traffic signal with a high required quality.

3. The communication apparatus according to claim 1, wherein:

    the communication apparatus is an access point, and
    the radio transmitter transmits the low-latency traffic information in Restricted-Target Wake Time (R-TWT) control information.

4. The communication apparatus according to claim 1, wherein:

    the communication apparatus is an access point, and
    the radio transmitter transmits the low-latency traffic information in non-R-TWT control information.

5. The communication apparatus according to claim 4, wherein the non-R-TWT control information is indicated using a Traffic Identifier (TID).

6. The communication apparatus according to claim 5, wherein the TID is included in a management signal.

7. The communication apparatus according to claim 5, wherein the TID is indicated in a trigger frame.

8. The communication apparatus according to claim 7, wherein the trigger frame is a negotiation signal for the coordinated transmission.

9. The communication apparatus according to claim 7, wherein the trigger frame is a transmission-start indication signal for the coordinated transmission.

10. The communication apparatus according to claim 4, wherein the non-R-TWT control information is buffer information.

11. The communication apparatus according to claim 10, wherein the low-latency traffic information is indicated by a combination of a TID bitmap and the buffer information.

12. The communication apparatus according to claim 4, wherein the non-R-TWT control information is Quality of Service (QoS) information.

13. The communication apparatus according to claim 1, further comprising a radio receiver that receives low-latency traffic information from another communication apparatus, wherein the controller determines traffic information that is usable for the coordinated transmission based on the low-latency traffic information from the another communication apparatus.

14. The communication apparatus according to claim 13, wherein the controller determines the traffic information that is usable for the coordinated transmission based on the low-latency traffic information from the another communication apparatus in a case where the communication apparatus is a controller access point.

15. The communication apparatus according to claim 13, wherein:

   the communication apparatus is an access point, and
   the controller determines low-latency traffic information to be indicated to the another access point based on low-latency traffic information of a terminal.

16. The communication apparatus according to claim 15, wherein the low-latency traffic information to be indicated to the another access point is a Buffer Status Report (BSR) in a Basic Service Set (BSS) unit.

17. The communication apparatus according to claim 1, further comprising a radio receiver that receives low-latency traffic information from another communication apparatus, wherein
   the controller performs control on the coordinated transmission based on the low-latency traffic information from the another communication apparatus.

18. The communication apparatus according to claim 17, wherein the control on the coordinated transmission is determination of a controller access point.

19. The communication apparatus according to claim 17, wherein the control on the coordinated transmission is determination of an access point that participates in the coordinated transmission.

20. The communication apparatus according to claim 1, further comprising a radio receiver that receives low-latency traffic information from another communication apparatus, wherein
   the controller changes a method of performing control on Coordinated Spatial Reuse (C-SR) of the coordinated transmission, based on the low-latency traffic information from the another communication apparatus.

21. The communication apparatus according to claim 20, wherein the control on the C-SR is determination of whether to perform transmission power control depending on the presence or absence of low-latency traffic information.

22. The communication apparatus according to claim 20, wherein the control on the C-SR is determination of a transmission timing depending on the presence or absence of low-latency traffic information.

23. The communication apparatus according to claim 20, wherein the control on the C-SR is a change in transmission power control information depending on the presence or absence of low-latency traffic information.

24. The communication apparatus according to claim 1, wherein the low-latency traffic information is low-latency traffic information for each link.

25. The communication apparatus according to claim 24, wherein the low-latency traffic information for each link is a TID bitmap for each link.

26. The communication apparatus according to claim 24, wherein the low-latency traffic information for each link is a Link bitmap for each TID.

27. The communication apparatus according to claim 24, wherein the low-latency traffic information for each link includes the presence or absence of a Link bitmap for each TID in control information.

28. A communication method, comprising:

   generating, by a communication apparatus, low-latency traffic information on coordinated transmission; and
   transmitting, by the communication apparatus, the generated low-latency traffic information.

FIG. 1

TWT element format

| ... | Traffic Info Control | Restricted TWT DL TID Bitmap | Restricted TWT UL TID Bitmap |
|-----|---------------------|------------------------------|------------------------------|

| DL TID Bitmap Valid | UL TID Bitmap Valid | Reserved |
|---------------------|---------------------|----------|

FIG. 2

FIG. 3

FIG. 4

FIG. 5

FIG. 6

FIG. 7

FIG. 8

FIG. 9

FIG. 10

RADIO TRANSMITTER 1108

1109

RADIO RECEIVER 1102

1101

DATA DEMODULATOR 1104

PREAMBLE DEMODULATOR 1103

TRANSMISSION SIGNAL GENERATOR 1107

DATA DECODER 1105

LOW-LATENCY TRAFFIC CONTROLLER 1106

FIG. 11

35

| Element ID | Length | Multi-AP DL TID bitmap | Multi-AP UL TID bitmap |
|---|---|---|---|

## FIG. 12

Common

| Trigger Type (Multi-AP) | UL Length | ... | Multi-AP Sequence (Negotiation) | Multi-AP Request DL TID bitmap | Multi-AP Request UL TID bitmap |
|---|---|---|---|---|---|

## FIG. 13

Common

| Trigger Type (Multi-AP) | UL Length | ... | Multi-AP Sequence (JT/C-BF/C-SR/C-OFDMA) | Multi-AP TID bitmap |
|---|---|---|---|---|

## FIG. 14

EP 4 576 872 A1

FIG. 15

| ACI Bitmap | Delta TID | ACI High | Scaling Factor | Queue Size High | Queue Size All |
|---|---|---|---|---|---|

**FIG. 16**

AP1 (Sharing AP): BSRP — S1701 →
AP2 (Shared AP): BSR — S1702 ←
MAP TF (C-BF) — S1703 →

**FIG. 17**

| Multi-AP TID Bitmap | Scaling Factor | Queue Size of TID 0 | ... | Queue Size of TID 7 |
|---|---|---|---|---|

available

**FIG. 18**

FIG. 19

FIG. 20

| Element ID | Length | User Priority | Frame Classifier |
|---|---|---|---|

**FIG. 21**

| Element ID | Length | Intra-Access Priority |
|---|---|---|

| User Priority | Alternate Queue | Drop Eligibility | | Reserved |
|---|---|---|---|---|

Multi-AP User Priority

**FIG. 22**

EP 4 576 872 A1

AP1
(Sharing AP)

AP2
(Shared AP)

STA1

STA2

| ADDTS Request (TSPEC element) | | MAP TF (C-BF) | MAP signal | DELTS |

S2301   S2302   ADDTS Response   S2303   MAP signal   S2306

S2304

S2305

**FIG. 23**

AP1
(Sharing AP)

AP2
(Shared AP)

STA1

STA2

| SCS Request | | MAP TF (C-BF) | MAP signal | SCS Response |

S2401   S2402   SCS Response   S2403   MAP signal   S2406

S2404

S2405

**FIG. 24**

| Category | Robust Action | Dialog Token | SCS Descriptor List |
|----------|---------------|--------------|---------------------|

| Element ID | Length | SCSID | Request Type | Intra-Access Category Priority Element (optional) | TCLAS Elements (optional) | TCLAS Processing Element (optional) | QoS Characteristics Elements (optional) | Optional Subelements |
|------------|--------|-------|--------------|--------------------------------------------------|---------------------------|-------------------------------------|-----------------------------------------|----------------------|

FIG. 25

| DL Multi-AP BSR (AP) | UL Multi-AP BSR (STAs) |
|---|---|

| ACI Bitmap | Delta TID | ACI High | Scaling Factor | Queue Size High | Queue Size All |
|---|---|---|---|---|---|

| Number of STAs | BSR of STA #1 | ... | BSR of STA #n |
|---|---|---|---|

| ACI Bitmap | Delta TID | ACI High | Scaling Factor | Queue Size High | Queue Size All |
|---|---|---|---|---|---|

## FIG. 26

FIG. 27

FIG. 28

EP 4 576 872 A1

FIG. 29

EP 4 576 872 A1

Transmit Power
Control of AP1

Transmit Power
Control of AP2

AP1

AP2

Interference
Suppression

Non-latency
sensitive traffic

Non-latency
sensitive traffic

STA1

STA2

## FIG. 30

Sharing AP

C-SR Info Request
(Tx PWR Info)

MAP
Trigger

C-SR
(Non-Latency
sensitive)

S3101

S3102

Tx PWR Info

S3103

C-SR
(Non-Latency
sensitive)

Shared AP

S3104

STA1

STA2

## FIG. 31

| Trigger Type (Multi-AP) | UL Length | ... | Multi-AP Sequence (C-SR Info Request) | Multi-AP TID bitmap | ... | Tx PWR Info |
|---|---|---|---|---|---|---|

| ARIL | Tx PWR Gain | RSSI |
|---|---|---|

FIG. 32

EP 4 576 872 A1

Transmit Power
Control of AP2

AP1

AP2

Interference
Suppression

Latency
sensitive traffic

Non-latency
sensitive traffic

STA1

STA2

FIG. 33

Sharing AP

MAP Trigger
(Tx PWR Info)

Latency
sensitive

S3401

Shared AP

C-SR
(Non- Latency
sensitive)

S3402

STA1

S3403

STA2

FIG. 34

EP 4 576 872 A1

SIFS | Tx offset

preamble | Latency sensitive | Non-Latency sensitive

Sharing AP

MAP Trigger
(Tx offset)

PPDU

Shared AP

S3501

S3502

C-SR

STA1

S3503

STA2

FIG. 35

| Trigger Type (Multi-AP) | UL Length | ... | Multi-AP Sequence (C-SR Info Request) | Multi-AP TID bitmap | ... | Tx PWR Info | Tx offset |
|---|---|---|---|---|---|---|---|

| ARIL | Tx PWR Gain | RSSI |
|---|---|---|

FIG. 36

TXOP

Sharing AP — MAP Trigger (PPDU offset=2) | PPDU (Latency-sensitive) | PPDU (Latency-sensitive) | PPDU (non-Latency-sensitive)

S3701

Shared AP — S3702 | S3704 | C-SR (non-Latency-sensitive) | S3706

S3703 | S3705 | S3708

STA1 — Ack | Ack | Ack

S3707

STA2 — Ack

**FIG. 37**

| Trigger Type (Multi-AP) | UL Length | ... | Multi-AP Sequence (C-SR Info Request) | Multi-AP TID bitmap | ... | Tx PWR Info | PPDU offset |

| ARIL | Tx PWR Gain | RSSI |

**FIG. 38**

FIG. 39

FIG. 40

| Trigger Type (Multi-AP) | UL Length | ... | Multi-AP Sequence (C-SR) | Multi-AP TID bitmap | ... | PSR |
|---|---|---|---|---|---|---|

FIG. 41

| Multi-AP TID bitmap (Link1 = 2.4GHz) | Multi-AP TID bitmap (Link2 = 5GHz) | Multi-AP TID bitmap (Link3 = 6GHz) |
| --- | --- | --- |

**FIG. 42**

**FIG. 43**

**FIG. 44**

## INTERNATIONAL SEARCH REPORT

| International application No. |
|---|
| **PCT/JP2023/029871** |

| A. | CLASSIFICATION OF SUBJECT MATTER |
|---|---|

*H04W 28/16*(2009.01)i; *H04W 84/12*(2009.01)i
FI: H04W28/16; H04W84/12

According to International Patent Classification (IPC) or to both national classification and IPC

| B. | FIELDS SEARCHED |
|---|---|

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022/132030 A1 (PANASONIC INTELLECTUAL PROPERTY CORPORATION OF AMERICA) 23 June 2022 (2022-06-23)<br>paragraphs [0048]-[0108], fig. 2, 9, 11, 15, 21-23, 31 | 1-28 |
| X | EP 3820225 A1 (INTEL CORPORATION) 12 May 2021 (2021-05-12)<br>paragraphs [0007]-[0008], [0027], fig. 2 | 1, 28 |
| X | IBRAHIM, Ahmed (SAMSUNG RESEARCH AMERICA). Multi-AP: TWT Information Sharing. IEEE 802.11-21/1046r3. 07 September 2021<br>slides 2, 4, 7 | 1, 28 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 October 2023** | **31 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/029871**

| Patent document cited in search report | Publication date (day/month/year) | Patent family member(s) | Publication date (day/month/year) |
|---|---|---|---|
| WO 2022/132030 A1 | 23 June 2022 | (Family: none) | |
| EP 3820225 A1 | 12 May 2021 | (Family: none) | |

Form PCT/ISA/210 (patent family annex) (January 2015)

**REFERENCES CITED IN THE DESCRIPTION**

**Patent documents cited in the description**

- WO 2008012114 A

- JP 2022131168 A